# EUROPEAN PATENT APPLICATION

(11) **EP 4 561 240 A1**
(43) Date of publication of application: **28.05.2025**
(21) Application number: 23870974.5
(22) Date of filing: 27.09.2023
(51) Int. Cl.: H04W 72/232

(54) **COMMUNICATION METHOD AND APPARATUS**

(30) Priority: 30.09.2022 CN 202211215630
(71) Applicant: Huawei Technologies Co., Ltd., Shenzhen, Guangdong 518129 (CN)
(72) Inventor: YUAN, Shitong, Shenzhen, Guangdong 518129 (CN); FAN, Bo, Shenzhen, Guangdong 518129 (CN); LI, Fang, Shenzhen, Guangdong 518129 (CN)
(74) Representative: Goddar, Heinz J.
(86) International application number: PCT/CN2023/122276
(87) International publication number: WO 2024/067748

(57) **Abstract**

This application relates to the communication field, and discloses a communication method and apparatus. The communication method is applied to a terminal device. The terminal device communicates with a network device via multiple transmission and reception points TRPs of the network device. The method includes: receiving, from the network device, first indication information indicating a common transmission configuration indicator TCI state, where different common TCI states correspond to different control resource set pool indexes; and determining, based on quasi-co-location information corresponding to the common TCI state and the control resource set pool index, a first reference signal resource used for beam failure detection. This resolves a problem that an existing beam failure detection method is not applicable to beam failure detection in a multi-TRP scenario.

## Description

This application claims priority to Chinese Patent Application No. 202211215630.1, filed with the China National Intellectual Property Administration on September 30, 2022 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

In a high-frequency band communication system, because of a small wavelength of a radio signal, a case in which signal propagation is blocked or another case is likely to occur, and signal propagation relay is caused. Therefore, a beam failure recovery mechanism is introduced into the Rel-15 new radio (new radio, NR) standard for high-frequency communication. The beam failure recovery mechanism includes beam failure detection (beam failure detection), and the beam failure detection is implemented via a counter (counter) and a timer (timer) at a medium access control (medium access control, MAC) layer to count a beam failure instance (beam failure instance, BFI) reported by a physical layer. In a conventional technology, a periodic reference signal set for beam failure detection may be configured for a terminal device. If no beam failure detection reference signal is configured for the terminal device, the terminal device detects a reference signal associated with a beam for receiving a PDCCH for beam failure detection. Specifically, the terminal device measures the reference signal. When measurement results are all lower than a threshold within a specific time period (based on a counter, where the counter is configured to accumulate a quantity of times that consecutive measurement results are lower than the threshold), the terminal device determines that a beam failure occurs, and enters a beam failure recovery process.

With development of technologies, a communication standard has been updated and iterated to the Rel-18 NR standard. In the Rel-18 NR standard, multiple transmission and reception point (multiple transmission and reception point, mTRP) enhancement in a unified beam (Unified TCI) configuration framework is considered. A beam failure detection method introduced into the Rel-15 NR standard is designed for a single TRP, and is not applicable to beam failure detection in a multi-TRP scenario.

### SUMMARY

Embodiments of this application provide a communication method and apparatus, to resolve a problem that an existing beam failure detection method is not applicable to beam failure detection in a multi-TRP scenario.

To achieve the foregoing objective, the following technical solutions are used in embodiments of this application.

According to a first aspect, a communication method is provided and is applied to a terminal device. The terminal device communicates with a network device via multiple transmission and reception points TRPs of the network device. The method includes:
receiving, from the network device, first indication information indicating a common transmission configuration indicator TCI state, where the common TCI state indicates a common beam, and different common TCI states correspond to different control resource set pool indexes; and determining, based on a reference signal included in quasi-co-location information corresponding to the common TCI state and the control resource set pool index, a first reference signal resource used for beam failure detection.

In this embodiment of this application, the network device first exchanges, with the terminal device, the first indication information indicating the common transmission configuration indicator TCI state, and then the terminal device determines the first reference signal resource based on the reference signal included in the quasi-co-location information corresponding to the common TCI state and the control resource set pool index. This fills a gap in a method for determining a beam failure detection resource in a multi-TRP transmission mode.

In a possible design, the first indication information includes activation signaling, the activation signaling is used for determining the common TCI state corresponding to the control resource set pool index, and the common TCI state corresponds to one TCI state or one group of TCI states. Alternatively, the first indication information includes activation signaling and downlink control indication information, the activation information is used for determining the common TCI state corresponding to the control resource set pool index, the common TCI state corresponds to a plurality of TCI states or a plurality of groups of TCI states, and the downlink control indication information indicates one common TCI state or one group of common TCI states in the plurality of common TCI states or the plurality of groups of common TCI states.

In this embodiment of this application, two possible forms of the first indication information are designed. In one case, the first indication information includes the activation signaling. In the other case, the first indication information includes the activation signaling and the downlink control indication information. The first indication information in both forms may indicate the common beam of the terminal device. The terminal device determines, based on a correspondence between the common beam and the control resource set pool index, a beam failure detection resource of a control resource set corresponding to the control resource set pool index.

In a possible design, the determining the first reference signal resource based on the reference signal included in the quasi-co-location information corresponding to the common TCI state and the control resource set pool index includes: if a control resource set pool or a control resource set corresponding to the control resource set pool index is not explicitly configured with or associated with a beam failure detection resource, determining the reference signal included in the quasi-co-location information corresponding to the common TCI state as the first reference signal resource.

In this embodiment of this application, when the control resource set pool corresponding to the control resource set pool index is not explicitly configured with or associated with the beam failure detection resource, a method for determining a beam failure detection resource is designed, to fill a gap in a method for determining a beam failure detection resource in a corresponding scenario.

In a possible design, the method further includes: when the common TCI state is updated, resetting a counter corresponding to the common TCI state, or resetting a counter corresponding to the control resource set pool index.

In this embodiment of this application, reset logic of the counter is designed regardless of the common TCI state is updated, to ensure that a beam failure detection mechanism can function effectively.

In a possible design, that the common TCI state is updated includes: The common TCI state indicated by the first indication information is inconsistent with an identifier of a common TCI state currently used by the terminal device for information transmission; or the common TCI state indicated by the first indication information is different from a reference signal included in quasi-co-location type-D information corresponding to a common TCI state currently used by the terminal device for information transmission.

In a possible design, the method further includes: receiving TRP mode switching indication information (indicating the terminal device to switch from information transmission based on a plurality of common beams to information transmission based on a single common beam) from the network device; and re-determining the beam failure detection resource from a reference signal included in quasi-co-location information corresponding to a control resource set pool index corresponding to the single common beam; or receiving the TRP mode configuration information from the network device, where a TRP mode indicated by the TRP mode configuration information is different from that of receiving the TRP mode configuration information; or re-determining the beam failure detection resource from an explicitly configured beam failure detection resource set indicated by the network device; or still determining a first reference signal as the beam failure detection resource.

In this embodiment of this application, in a scenario in which the network device indicates the terminal device to switch from the information transmission based on the plurality of common beams to the information transmission based on the single common beam, a method for determining a beam failure detection resource is designed, to fill a gap in a method for determining a beam failure detection resource in a corresponding scenario.

In a possible design, the method further includes:
receiving TRP mode switching indication information (indicating to switch from information transmission based on a single common beam to information transmission based on a plurality of common beams) from the network device, where the plurality of common beams include a newly added common beam and an original common beam in this case; and maintaining a beam failure detection resource corresponding to the original common beam, and determining a beam failure detection resource of the newly added beam based on a reference signal included in quasi-co-location information corresponding to a common TCI state corresponding to the newly added beam; or maintaining a beam failure detection resource of the original beam, and determining, as a beam failure detection resource of the newly added beam, a second resource indicated by the network device to the terminal device by using the resource indication information.

In this embodiment of this application, in a scenario in which the network device indicates the terminal device to switch from the information transmission based on the single common beam to the information transmission based on the plurality of common beams, a method for determining a beam failure detection resource is designed, to fill a gap in a method for determining a beam failure detection resource in a corresponding scenario.

In a possible design, the method further includes: receiving, from the network device, second indication information (carried in RRC signaling or DCI signaling) indicating a first common TCI state in the common TCI state; and determining a reference signal included in quasi-co-location information corresponding to the first common TCI state as the first reference signal resource; or using a reference signal included in quasi-co-location information of the first common TCI state to receive information from a physical downlink control channel.

According to a second aspect, a communication method is provided and is applied to a terminal device. The terminal device communicates with a network device via multiple transmission and reception points TRPs of the network device. The method includes:
receiving, from the network device, first indication information indicating at least two common transmission configuration indicator TCI states, where one of the at least two common TCI states is used for receiving one control resource set, or the at least two common TCI states are used for simultaneously receiving one control resource set, or the at least two common TCI states are respectively used for receiving different control resource sets, and the different control resource sets carry same information; and determining, based on a reference signal included in quasi-co-location information corresponding to the common TCI state, a first reference signal resource used for beam failure detection.

In this embodiment of this application, the network device first exchanges, with the terminal device, the first indication information indicating the common transmission configuration indicator TCI state, and then the terminal device determines the first reference signal resource based on the reference signal included in the quasi-co-location information corresponding to the common TCI state. This fills a gap in a method for determining a beam failure detection resource in a multi-TRP transmission mode.

In a possible design, the first indication information includes activation signaling, the activation signaling indicates the at least two common TCI states, and the at least two common TCI states correspond to one TCI state or one group of TCI states. Alternatively, the first indication information includes activation signaling and downlink control indication information, the activation information indicates the at least two common TCI states, the at least two common TCI states correspond to a plurality of TCI states or a plurality of groups of TCI states, and the downlink control indication information indicates one common TCI state or one group of common TCI states in the plurality of common TCI states or the plurality of groups of common TCI states.

In this embodiment of this application, two possible forms of the first indication information are designed. In one case, the first indication information includes the activation signaling. In the other case, the first indication information includes the activation signaling and the downlink control indication information. The first indication information in both forms may indicate a common beam of the terminal device.

In a possible design, the determining a first reference signal resource based on reference signals included in quasi-co-location information corresponding to the at least two common TCI states includes: determining quasi-co-location information corresponding to a 1^{st} at least two common TCI states in the at least two common TCI states as the first reference signal resource by default.

In this embodiment of this application, a method for determining a beam failure detection resource is designed. Specifically, the quasi-co-location information corresponding to the 1^{st} at least two common TCI states in the at least two common TCI states is determined as the first reference signal resource by default, so as to fill a gap in a method for a beam failure detection resource in a unified beam configuration framework.

In a possible design, the method further includes: when one or more of the at least two common TCI states are updated, resetting a counter corresponding to an updated common TCI state.

In this embodiment of this application, reset logic of the counter is designed regardless of the at least two common TCI states are updated, to ensure that a beam failure detection mechanism can function effectively.

In a possible design, that the at least two common TCI states are updated includes: The at least two common TCI states indicated by the first indication information are inconsistent with an identifier of a common TCI state currently used by the terminal device for information transmission; or the at least two common TCI states indicated by the first indication information are different from a reference signal included in quasi-co-location type-D information corresponding to a common TCI state currently used by the terminal device for information transmission.

In a possible design, the method further includes: receiving TRP mode switching indication information (indicating the terminal device to switch from information transmission based on a plurality of common beams to information transmission based on a single common beam) from the network device; and re-determining a beam failure detection resource from a reference signal included in quasi-co-location information corresponding to the single common beam; or re-determining a beam failure detection resource from an explicitly configured beam failure detection resource set indicated by the network device; or still determining a first reference signal as a beam failure detection resource.

In this embodiment of this application, in a scenario in which the network device indicates the terminal device to switch from the information transmission based on the plurality of common beams to the information transmission based on the single common beam, a method for determining a beam failure detection resource is designed, to fill a gap in a method for determining a beam failure detection resource in a corresponding scenario.

In a possible design, the method further includes:
receiving TRP mode switching indication information (indicating to switch from information transmission based on a single common beam to information transmission based on a plurality of common beams) from the network device, where the plurality of common beams include a newly added common beam and an original common beam in this case; and maintaining a beam failure detection resource corresponding to the original common beam, and determining a beam failure detection resource of the newly added beam based on reference signals included in quasi-co-location information corresponding to at least two common TCI states corresponding to the newly added beam.

In this embodiment of this application, in a scenario in which the network device indicates the terminal device to switch from the information transmission based on the single common beam to the information transmission based on the plurality of common beams, a method for determining a beam failure detection resource is designed, to fill a gap in a method for determining a beam failure detection resource in a corresponding scenario.

In a possible design, the method further includes: receiving, from the network device, second indication information (carried in RRC signaling or DCI signaling) indicating a first common TCI state in the at least two common TCI states; and determining a reference signal included in quasi-co-location information corresponding to the first common TCI state as the first reference signal resource; or using a reference signal included in quasi-co-location information of the first common TCI state to receive information from a physical downlink control channel.

According to a third aspect, a communication method is provided and is applied to a network device. A terminal device communicates with the network device via multiple transmission and reception points TRPs of the network device. The method includes:
The network device sends, to the terminal device, first indication information indicating a common transmission configuration indicator TCI state, where different common TCI states correspond to different control resource set pool indexes.

In this embodiment of this application, the network device first exchanges, with the terminal device, the first indication information indicating the common transmission configuration indicator TCI state, and then the terminal device determines the first reference signal resource based on a reference signal included in quasi-co-location information corresponding to the common TCI state and the control resource set pool index. This fills a gap in a method for determining a beam failure detection resource in a multi-TRP transmission mode.

In a possible design, the first indication information includes activation signaling indicating the common TCI state, and the common TCI state corresponds to one TCI state or one group of TCI states. Alternatively, the first indication information includes activation signaling and downlink control indication information, the common TCI state corresponds to a plurality of TCI states or a plurality of groups of TCI states, and the downlink control indication information indicates one common TCI state or one group of common TCI states in the plurality of common TCI states or the plurality of groups of common TCI states.

In this embodiment of this application, two possible forms of the first indication information are designed. In one case, the first indication information includes the activation signaling. In the other case, the first indication information includes the activation signaling and the downlink control indication information. The first indication information in the two forms may indicate a beam failure detection resource of the terminal device.

In a possible design, the method further includes: sending TRP mode switching indication information to the terminal device, where the TRP mode switching indication information indicates the terminal device to switch from information transmission based on a plurality of common beams to information transmission based on a single common beam, or the TRP mode switching indication information indicates to switch from information transmission based on a single common beam to information transmission based on a plurality of common beams.

In this embodiment of this application, in a scenario in which the network device indicates the terminal device to switch from the information transmission based on the plurality of common beams to the information transmission based on the single common beam (or a scenario in which the network device indicates the terminal device to switch from the information transmission based on the single common beam to the information transmission based on the plurality of common beams), a method for determining a beam failure detection resource is designed, to fill a gap in a method for determining a beam failure detection resource in a corresponding scenario.

In a possible design, the method further includes: when the TRP mode switching indication information indicates to switch from the information transmission based on the single common beam to the information transmission based on the plurality of common beams, sending resource indication information to the terminal device, where the resource indication information indicates a second resource used by the terminal device to determine the beam failure detection resource.

In a possible design, the method further includes:
sending, to the terminal device, second indication information (indicating a first common TCI state in the common TCI state) carried in RRC signaling or DCI signaling.

In this embodiment of this application, when the network device exchanges, with the terminal device, the second indication information indicating the first common TCI state in the common TCI state, a method for determining a beam failure detection resource is designed, to fill a gap in a method for determining a beam failure detection resource in a corresponding communication scenario in a unified beam configuration framework.

According to a fourth aspect, a communication apparatus is provided and used in a terminal device. The terminal device communicates with a network device via multiple transmission and reception points TRPs of the network device. The communication apparatus may be a terminal device or a chip or a system-on-a-chip in a terminal device. The communication apparatus may implement functions performed by the terminal device according to any one of the first aspect or the possible designs of the first aspect. The functions may be implemented by hardware, or may be implemented by hardware executing corresponding software. The hardware or the software includes one or more modules corresponding to the foregoing functions. For example, the communication apparatus includes: a transceiver module, configured to receive first indication information from the network device, where the first indication information indicates a common transmission configuration indicator TCI state, and different common TCI states correspond to different control resource set pool indexes; and a processing module, configured to determine a first reference signal resource based on a reference signal included in quasi-co-location information corresponding to the common TCI state and the control resource set pool index, where the first reference signal resource is used for beam failure detection.

In a possible implementation, the first indication information includes activation signaling, the activation signaling is used for determining the common TCI state corresponding to the control resource set pool index, and the common TCI state corresponds to one TCI state or one group of TCI states. Alternatively, the first indication information includes activation signaling and downlink control indication information, the activation information is used for determining the common TCI state corresponding to the control resource set pool index, the common TCI state corresponds to a plurality of TCI states or a plurality of groups of TCI states, and the downlink control indication information indicates one common TCI state or one group of common TCI states in the plurality of common TCI states or the plurality of groups of common TCI states.

In a possible implementation, the processing module is specifically configured to: if a control resource set pool corresponding to the control resource set pool index is not explicitly configured with or associated with a beam failure detection resource, determine the reference signal included in the quasi-co-location information corresponding to the common TCI state as the first reference signal resource.

In a possible implementation, the processing module is further configured to: when the common TCI state is updated, reset a counter corresponding to the common TCI state, or reset a counter corresponding to the control resource set pool index.

In a possible implementation, that the common TCI state is updated includes: The common TCI state indicated by the first indication information is inconsistent with an identifier of a common TCI state currently used by the terminal device for information transmission; or the common TCI state indicated by the first indication information is different from a reference signal included in quasi-co-location type-D information corresponding to a common TCI state currently used by the terminal device for information transmission.

In a possible implementation, the transceiver module is further configured to: receive TRP mode switching indication information from the network device, where the TRP mode switching indication information indicates the terminal device to switch from information transmission based on a plurality of common beams to information transmission based on a single common beam. The processing module is further configured to: re-determine the beam failure detection resource from a reference signal included in quasi-co-location information corresponding to a control resource set pool index corresponding to the single common beam; or re-determine the beam failure detection resource set from an explicitly configured beam failure detection resource set indicated by the network device; or still determine a first reference signal as the beam failure detection resource.

In a possible implementation, the receiving module is further configured to: receive TRP mode switching indication information from the network device, where the TRP mode switching indication information indicates to switch from information transmission based on a single common beam to information transmission based on a plurality of common beams, and the plurality of common beams include a newly added common beam and an original common beam. The processing module is further configured to: maintain a beam failure detection resource corresponding to the original common beam, and determine a beam failure detection resource of the newly added beam based on a reference signal included in quasi-co-location information corresponding to a common TCI state corresponding to the newly added beam. Alternatively, the processing module is further configured to: maintain a beam failure detection resource of the original beam, and determine a second resource as a beam failure detection resource of the newly added beam, where the second resource is indicated by the network device to the terminal device by using resource indication information.

In a possible implementation, the transceiver module is further configured to: receive second indication information from the network device, where the second indication information indicates a first common TCI state in the common TCI state. The processing module is further configured to determine a reference signal included in quasi-co-location information corresponding to the first common TCI state as the first reference signal resource. Alternatively, the processing module is further configured to use a reference signal included in quasi-co-location information corresponding to the first common TCI state to receive information from a physical downlink control channel, where the second indication information is carried in RRC signaling or DCI signaling.

According to a fifth aspect, a communication apparatus is provided and used in a terminal device. The terminal device communicates with a network device via multiple transmission and reception points TRPs of the network device. The communication apparatus may be a terminal device or a chip or a system-on-a-chip in a terminal device. The communication apparatus may implement functions performed by the terminal device according to any one of the second aspect or the possible designs of the second aspect. The functions may be implemented by hardware, or may be implemented by hardware executing corresponding software. The hardware or the software includes one or more modules corresponding to the foregoing functions. For example, the communication apparatus includes: a transceiver module, configured to receive first indication information from a network device, where the first indication information indicates at least two common transmission configuration indicator TCI states, and one of the at least two common TCI states is used for receiving one control resource set, or the at least two common TCI states are used for simultaneously receiving one control resource set, or the at least two common TCI states are respectively used for receiving different control resource sets, and the different control resource sets carry same information; and a processing module, configured to determine a first reference signal resource based on reference signals included in quasi-co-location information corresponding to at least two common TCI states, where the first reference signal resource is used for beam failure detection.

In a possible implementation, the first indication information includes activation signaling, the activation signaling indicates the at least two common TCI states, and the at least two common TCI states correspond to one common TCI state or one group of common TCI states. Alternatively, the first indication information includes activation signaling and downlink control indication information, the activation information indicates the at least two common TCI states, the at least two common TCI states correspond to a plurality of common TCI states or a plurality of groups of common TCI states, and the downlink control indication information indicates one common TCI state or one group of common TCI states in the plurality of common TCI states or the plurality of groups of common TCI states.

In a possible implementation, the processing module is specifically configured to: determine a reference signal included in quasi-co-location information corresponding to a 1^{st} common TCI state in the at least two common TCI states as the first reference signal resource by default, or determine the quasi-co-location information corresponding to the at least two common TCI states as the first reference signal resource.

In a possible implementation, the processing module is further configured to: when one or more of the at least two common TCI states are updated, reset a counter corresponding to an updated common TCI state.

In a possible implementation, that the at least two common TCI states are updated includes: The at least two common TCI states indicated by the first indication information are inconsistent with an identifier of a common TCI state currently used by the terminal device for information transmission; or the at least two common TCI states indicated by the first indication information are different from a reference signal included in quasi-co-location type-D information corresponding to a common TCI state currently used by the terminal device for information transmission.

In a possible implementation, the transceiver module is further configured to: receive TRP mode switching indication information from the network device, where the TRP mode switching indication information indicates the terminal device to switch from information transmission based on a plurality of common beams to information transmission based on a single common beam. The processing module is further configured to re-determine a beam failure detection resource from a reference signal included in quasi-co-location information corresponding to the single common beam. Alternatively, the processing module is further configured to re-determine a beam failure detection resource from an explicitly configured beam failure detection resource set indicated by the network device. Alternatively, the processing module is further configured to still determine a first reference signal as a beam failure detection resource.

In a possible implementation, the transceiver module is further configured to: receive TRP mode switching indication information from the network device, where the TRP mode switching indication information indicates to switch from information transmission based on a single common beam to information transmission based on a plurality of common beams, and the plurality of common beams include a newly added common beam and an original common beam. The processing module is further configured to: maintain a beam failure detection resource corresponding to the original common beam, and determine a beam failure detection resource of the newly added beam based on reference signals included in quasi-co-location information corresponding to at least two common TCI states corresponding to the newly added beam.

In a possible implementation, the transceiver module is further configured to: receive second indication information from the network device, where the second indication information indicates a first common TCI state in the at least two common TCI states. The processing module is further configured to determine a reference signal included in quasi-co-location information corresponding to the first common TCI state as the first reference signal resource. Alternatively, the processing module is further configured to use a reference signal included in quasi-co-location information corresponding to the first common TCI state to receive information from a physical downlink control channel, where the second indication information is carried in RRC signaling or DCI signaling.

According to a sixth aspect, a communication apparatus is provided and used in a network device. A terminal device communicates with the network device via multiple transmission and reception points TRPs of the network device. The communication apparatus may be a network device or a chip or a system-on-a-chip in a network device. The communication apparatus may implement functions performed by the network device according to any one of the third aspect or the possible designs of the third aspect. The functions may be implemented by hardware, or may be implemented by hardware executing corresponding software. The hardware or the software includes one or more modules corresponding to the foregoing functions. For example, the communication apparatus includes: a transceiver module, configured to send first indication information to the terminal device, where the first indication information indicates a common transmission configuration indicator TCI state, and different common TCI states correspond to different control resource set pool indexes.

In a possible implementation, the first indication information includes activation signaling, the activation signaling is used for determining the common TCI state, and the common TCI state corresponds to one TCI state or one group of TCI states. Alternatively, the first indication information includes activation signaling and downlink control indication information, the activation information is used for determining the common TCI state, the common TCI state corresponds to a plurality of TCI states or a plurality of groups of TCI states, and the downlink control indication information indicates one common TCI state or one group of common TCI states in the plurality of common TCI states or the plurality of groups of common TCI states.

In a possible implementation, the transceiver module is further configured to: send TRP mode switching indication information to the terminal device, where the TRP mode switching indication information indicates the terminal device to switch from information transmission based on a plurality of common beams to information transmission based on a single common beam, or the TRP mode switching indication information indicates to switch from information transmission based on a single common beam to information transmission based on a plurality of common beams.

In a possible implementation, the transceiver module is further configured to: when the TRP mode switching indication information indicates to switch from the information transmission based on the single common beam to the information transmission based on the plurality of common beams, send resource indication information to the terminal device, where the resource indication information indicates a second resource used by the terminal device to determine a beam failure detection resource.

In a possible implementation, the transceiver module is further configured to: send second indication information to the terminal device, where the second indication information indicates a first common TCI state in the common TCI state, and the second indication information is carried in RRC signaling or DCI signaling.

According to a seventh aspect, a communication apparatus is provided. The communication apparatus includes a processor and a transceiver. The processor and the transceiver are configured to support the communication apparatus in performing the communication method according to the first aspect, the second aspect, or the third aspect.

According to an eighth aspect, a computer-readable storage medium is provided. The computer-readable storage medium stores computer instructions. When the computer instructions are run, the method according to the first aspect, the second aspect, or the third aspect is performed.

According to a ninth aspect, a computer program product including instructions is provided. When the computer program product runs on a computer, the computer is enabled to perform the method according to the first aspect, the second aspect, or the third aspect.

According to a tenth aspect, a chip is provided. The chip includes a processor and a transceiver. The processor and the transceiver are configured to support a communication apparatus in performing the method according to the first aspect, the second aspect, or the third aspect.

For beneficial effect described in the fourth aspect to the tenth aspect of this application, correspondingly refer to beneficial effect analysis in the first aspect, the second aspect, or the third aspect. Details are not described herein again.

### BRIEF DESCRIPTION OF DRAWINGS

FIG. 1 is a diagram of an mTRP beam failure scenario according to an embodiment of this application;
FIG. 2 is a diagram of a structure of a communication system according to an embodiment of this application;
FIG. 3 is a schematic flowchart of a communication method according to an embodiment of this application;
FIG. 4 is a schematic flowchart of another communication method according to an embodiment of this application;
FIG. 5 is a schematic flowchart of another communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a schematic flowchart of another communication method according to an embodiment of this application;
FIG. 9 is a schematic flowchart of another communication method according to an embodiment of this application;
FIG. 10 is a diagram of a structure of a communication apparatus according to an embodiment of this application;
FIG. 11 is a diagram of a structure of another communication apparatus according to an embodiment of this application;
FIG. 12 is a diagram of a structure of another communication apparatus according to an embodiment of this application;
FIG. 13 is a diagram of a structure of another communication apparatus according to an embodiment of this application; and
FIG. 14 is a diagram of a structure of another communication system according to an embodiment of this application.

### DESCRIPTION OF EMBODIMENTS

The following describes technical solutions in embodiments of this application with reference to the accompanying drawings in embodiments of this application. In descriptions of this application, unless otherwise specified, "/" indicates that associated objects are in an "or" relationship. For example, A/B may indicate A or B. In this application, "and/or" merely describes an association relationship between associated objects and indicates that three relationships may exist. For example, A and/or B may indicate the following three cases: Only A exists, both A and B exist, and only B exists, where A and B may be singular or plural. In addition, in the descriptions of this application, unless otherwise specified, "plurality of" means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used for representing giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

Before embodiments of this application are described, some terms in embodiments of this application are explained.

Reference signal (reference signal): Based on a long term evolution LTE/NR protocol, at a physical layer, uplink communication includes transmission of an uplink physical channel and an uplink signal. The uplink physical channel includes a random access channel (physical random access channel, PRACH), an uplink control channel (physical uplink control channel, PUCCH), an uplink data channel (physical uplink shared channel, PUSCH), and the like. The uplink signal includes a channel sounding signal SRS, an uplink control channel demodulation reference signal (PUCCH demodulation reference signal, PUCCH-DMRS), an uplink data channel demodulation reference signal PUSCH-DMRS, an uplink phase noise tracking signal (phase noise tracking reference signal, PTRS), an uplink positioning signal (uplink positioning RS), and the like. Downlink communication includes transmission of a downlink physical channel and a downlink signal. The downlink physical channel includes a broadcast channel (physical broadcast channel, PBCH), a downlink control channel (physical downlink control channel, PDCCH), a downlink data channel (physical downlink shared channel, PDSCH), and the like. The downlink signal includes a primary synchronization signal (primary synchronization signal, PSS for short)/secondary synchronization signal (secondary synchronization signal, SSS), a downlink control channel demodulation reference signal PDCCH-DMRS, a downlink data channel demodulation reference signal PDSCH-DMRS, a phase noise tracking signal PTRS, a channel state information reference signal (channel state information reference signal, CSI-RS), a cell signal (cell reference signal, CRS) (not available in NR), a fine synchronization signal (time/frequency tracking reference signal, TRS) (not available in LTE), an LTE/NR positioning signal (positioning RS), and the like.

Transmission configuration indicator (TCI): The transmission configuration indicator may also be referred to as a TCI state (TCI-State). A communication protocol specifies that QCL is configured by using a TCI state, and a parameter of the TCI state is used for configuring a quasi-co-location relationship between one or two downlink reference signals and a DMRS of a PDSCH. A downlink control indication (downlink control indication, DCI) may include a TCI field, and the TCI field is a field that is in the DCI and that indicates quasi-co-location of a PDSCH antenna port.

The TCI is configured by a network device for a terminal device by using an RRC message, and is referred to as a TCI state in configuration signaling. After the network device configures the TCI state for the terminal device by using the RRC message, the network device may send medium access control element (medium access control-control element, MAC-CE) signaling to the terminal device. The MAC-CE signaling is used for activating one or more of TCI states configured by the network device for the terminal device. Optionally, the network device may further send a DCI to the terminal device. The DCI indicates one of the TCI states activated by the MAC-CE.

The TCI state includes one or two QCL relationships. The QCL relationship represents a consistency relationship between a signal/channel to be received currently and a previously known reference signal. If there is a QCL relationship, the terminal device may receive or send an upcoming signal/channel by inheriting a receiving or sending parameter previously used for receiving or sending a reference signal. Each TCI state corresponds to one beam. The terminal device may perform communication and transmission by using the beam.

The following describes a configuration, activation, and an indication of the TCI state.

TCI state configuration: The network device configures a plurality of TCI states for the terminal device by using RRC signaling. Each of these TCI states includes QCL-info whose type is a type D. Alternatively, the network device may configure a TCI-state that does not include the QCL-info whose type is the type D. However, the TCI states do not indicate a data transmission beam. Therefore, details are not further described herein.

TCI state activation: After configuring the plurality of TCI states, the network device further needs to activate eight of the TCI states by using the MAC-CE. The eight TCI states are in one-to-one correspondence with eight values of the TCI field in the DCI. In other words, the eight TCI states corresponding to the eight values of the TCI field in the DCI are determined by using the MAC-CE.

TCI state indication: The network device indicates a specific TCI-state by using the TCI field in the DCI. For example, a value of the TCI field in the DCI sent by the network device to the terminal device is 000, indicating that a TCI state corresponding to 000 is used for a data transmission beam. A reference signal included in the QCL-info whose type is the type D in the TCI state is a CSI-RS whose index is #1, indicating that a beam used for data transmission is the same as a reception beam corresponding to the CSI-RS whose index is #1. The reception beam corresponding to the CSI-RS whose index is #1 may be determined through a beam measurement procedure, and is known to the terminal device. Therefore, the terminal device may determine, based on a specific value of the TCI field, a beam corresponding to the data transmission beam, to send or receive data by using the corresponding beam.

It should be noted that the two description manners of the TCI-state and the TCI state in this specification may be interchanged.

Beam (beam): The beam is a communication resource. The beam may be a wide beam, a narrow beam, or a beam of another type, and a technology for forming a beam may be a beamforming technology or another technical means. The beamforming technology may be specifically a digital beamforming technology, an analog beamforming technology, and a hybrid digital/analog beamforming technology. Different beams may be considered as different resources.

In an NR protocol, the beam may be referred to as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-co-location (quasi-co-location, QCL) information, a QCL assumption, a QCL indication, or the like. The beam may be indicated by using a TCI-state parameter, or may be indicated by using a spatial relation (spatial relation) parameter. Therefore, in this application, the beam may be replaced with the spatial domain filter, the spatial filter, the spatial domain parameter, the spatial parameter, the spatial domain setting, the spatial setting, the QCL information, the QCL assumption, the QCL indication, a TCI-state (including an uplink TCI-state and a downlink TCI-state), the spatial relation, or the like. The foregoing terms are also equivalent to each other. The beam may alternatively be replaced with another term for representing the beam. This is not limited in this application.

A transmit end may send same information or different information by using different beams. Optionally, a plurality of beams having a same communication feature or similar communication features may be considered as one beam. One beam may include one or more antenna ports configured to transmit a data channel, a control channel, a sounding signal, and the like. An uplink transmission beam may be indicated by using any one of a spatial relation, a TCI-state, or an SRS resource (where it means that a transmission beam for the SRS resource is used). Therefore, the uplink transmission beam may alternatively be replaced with the SRS resource.

A beam for sending a signal may be referred to as a transmission beam (transmission beam, Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting).

A beam for receiving a signal may be referred to as a reception beam (reception beam, Rx beam), a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting).

For example, the transmission beam may be signal strength distribution formed in different directions in space after a signal is transmitted through an antenna, and the reception beam may be signal strength distribution in different directions in space of a radio signal received from an antenna. It may be understood that one or more antenna ports forming one beam may also be considered as one antenna port set.

When a low-frequency band or an intermediate-frequency band is used, the transmit end may send signals in an omnidirectional manner or sent at a wide angle. When a high-frequency band is used, because of a small carrier wavelength in a high-frequency communication system, an antenna array including many antenna elements may be disposed at the transmit end and a receive end. The transmit end sends a signal by using a specific beamforming weight, so that the sent signal forms a spatially directional beam, and the receive end receives the signal by using the antenna array by using a specific beamforming weight. This helps increase received power of signals at the receive end and resist a path loss.

Quasi-co-location (quasi-co-location, QCL): A quasi-co-location relationship indicates that a plurality of resources have one or more same or similar communication features. For a plurality of resources having a quasi-co-location relationship, a same communication configuration or similar communication configurations may be used. For example, if two antenna ports have a quasi-co-location relationship, a large-scale channel property of transmitting one symbol by one port may be deduced from a large-scale channel property of transmitting one symbol by the other port. The large-scale property may include a delay spread, an average delay, a Doppler spread, a Doppler frequency shift, an average gain, a reception parameter, a reception beam number of a terminal device, a transmit/receive channel correlation, an angle of arrival, a spatial correlation of a receiver antenna, a dominant angle of arrival (Angle of Arrival, AoA), an average angle of arrival, an AoA spread, and the like. Specifically, that a co-location indication indicates whether at least two groups of antenna ports have a co-location relationship includes: The co-location indication indicates whether channel state information reference signals sent by the at least two groups of antenna ports are from a same transmission point, or the co-location indication indicates whether channel state information reference signals sent by the at least two groups of antenna ports are from a same beam group.

Common beam: Currently, each channel uses an independent beam indication. Each channel has a corresponding beam. In this application, a common beam is defined, and is simultaneously used for a plurality of uplink and/or downlink channels. The common beam is specifically defined as a same beam used by one or more channels, one or more types of channels, one or more reference signals, and/or one or more types of reference signals. The channel includes but is not limited to at least one of a physical downlink control channel PDCCH, a physical downlink shared channel PDSCH, a physical uplink control channel PUCCH, a physical uplink shared channel PUSCH, and a physical random access channel PRACH. The reference signal includes but is not limited to at least one of a synchronization signal SSB, a CSI-RS, a demodulation reference signal DMRS, a phase tracking reference signal PTRS, a timing reference signal TRS, a sounding (sounding) reference signal SRS, and the like.

Joint (joint) common beam: The joint common beam is used for both transmission of at least one uplink channel or at least one uplink reference signal and transmission of at least one downlink channel or at least one downlink reference signal, for example, a PDCCH, a PDSCH, a PUCCH, and a PUSCH. The joint common beam may also be referred to as an uplink/downlink common beam.

Uplink common beam: The uplink common beam is simultaneously used for transmission of a plurality of uplink channels, and/or simultaneously used for transmission of a plurality of types of uplink channels, and/or simultaneously used for transmission of one or more uplink reference signals, for example, a PUCCH, a PUSCH, and an SRS.

Downlink common beam: The downlink common beam is simultaneously used for transmission of a plurality of downlink channels, and/or simultaneously used for transmission of a plurality of types of downlink channels, and/or simultaneously used for transmission of one or more downlink reference signals, for example, a PDCCH, a PDSCH, and a CSI-RS.

Form of a common beam: The common beam may be of a newly defined structure (different from an existing TCI-state). For example, the common beam includes beam indication related information, including but not limited to one or more of the following: a common beam identifier (identifier, ID), a logical cell identifier (cell ID), a physical cell identifier, a bandwidth part identifier, a reference signal resource for determining a beam, a QCL type, an uplink power control related parameter (for example, a path loss measurement reference signal resource, p0, and a closed loop index (closedLoopIndex)), and an identifier of a path loss reference signal.

Application range of a common beam: The common beam may be at a cell level, in other words, one common beam is used for transmission of a plurality of channels in one cell. The common beam may be at a bandwidth part BWP level, and is used for transmission of a plurality of beams in one BWP. The common beam may alternatively be cross-cell, in other words, the common beam is used for transmission of a plurality of channels in a plurality of cells. The plurality of cells may be a plurality of cells in one frequency band (band). The plurality of cells may alternatively be a plurality of inter-band cells.

TCI mode: TCI modes include a joint (joint) mode and a separate (separate) mode. The joint mode means that a same beam TCI state is used for both uplink transmission and downlink transmission between a TRP and a terminal device. The separate mode means that different beam TCI states are used for uplink transmission between a TRP and a terminal device and downlink transmission between the TRP and the terminal device.

Control resource set: The control resource set indicates a frequency domain resource set for PDCCH transmission, is a parameter configuration unit for the PDCCH transmission, and includes a related configuration parameter of a PDCCH. Each control resource set belongs to a corresponding control resource set pool, and each control resource set pool corresponds to one index (CORESET pool index). A configuration parameter of the control resource set includes an index of the control resource set pool to which the control resource set belongs. Generally, in a multiple downlink control information (multiple downlink control information, MDCI) scenario or a non-coherent joint transmission (non-coherent joint transmission, NCJT) scenario, each control resource set corresponds to one TRP, and different control resource sets may correspond to different TRPs. In other words, a terminal device receives, by using a control resource set corresponding to a TRP, a PDCCH sent by the TRP.

A network device divides, by using a radio resource control protocol RRC message, a resource used by the terminal device to receive the PDCCH into two groups, and each group of resources is referred to as a control resource set (CORESET). Each control resource set is associated with one control resource set pool index (CORESET pool Index). Each control resource set pool may correspond to one TCI state. Therefore, the TCI state corresponding to the control resource set pool may be determined by using the control resource set pool index.

Beam failure recovery process:
(1) UE sends a beam failure recovery request to a base station based on a PRACH resource associated with q_new (a new beam, that is, a candidate beam configured by the base station after a beam failure).
(2) Starting from a 4^{th} slot after the request is sent, the UE attempts to receive response information sent by the base station. A resource position for receiving the response information is pre-configured by the base station by using a recovery Search SpaceId information element.
(3) When receiving the foregoing response information, the UE receives the response information by using a beam for receiving q_new.
(4) After receiving 28 orthogonal frequency division multiplexing OFDM symbols of the response message, the UE starts to receive other PDCCH information by using a beam corresponding to a reference signal indicated by q_new, until the UE receives new MAC-CE signaling sent by the base station, to indicate a new reception beam.
(5) After receiving the 28 OFDM symbols of the response message, the UE sends PUCCH information by using a beam for sending a PRACH, until the base station sends new MAC-CE signaling, to indicate a new transmission beam.

In the Rel-18 NR standard, multiple transmission and reception point (multiple transmission and reception point, mTRP) enhancement in a unified beam configuration framework is considered, to indicate a pair of an uplink beam and a downlink beam in the unified beam configuration framework, where the two beams (the pair of beams) respectively correspond (corresponds) to two TRPs. Specifically, in a scenario in which the two TRPs are connected, if a beam failure occurs on one of the TRPs, for one of the TRPs, if a beam mode is configured as a separate mode, an uplink beam and a downlink beam are separately determined; or if a beam mode is a joint mode, it is determined that one beam is used for both uplink transmission and downlink transmission.

In evolution of the standard protocol release Rel-17 NR, a unified beam configuration framework is introduced into the standard. A functional property of beam failure recovery is enhanced. Specifically, after UE is configured with a unified beam, if the UE enters a beam failure recovery procedure, after a base station responds to a new beam, different from a protocol version earlier than Rel-17 (where in the previous version, a beam to which a response is made is used only for a beam in a control resource set of a downlink control channel), the new beam may be simultaneously used for communication of a plurality of uplink and downlink channel signals.

In Rel-17 NR, beam failure detection recovery is also enhanced for an mTRP scenario. A MAC-CE can be used for dynamically changing a beam failure detection-reference signal (beam failure detection-reference signal, BFD-RS). In addition, two or two groups of sets q0 (where q0 represents a set, including an index of one or more reference signals) can be configured to correspond to two TRPs, and are associated with two link-level recovery resources, to send a scheduling request for requesting a PUSCH channel resource used for carrying a MAC-CE for sending BFR (beam failure recovery) information. For mTRPs in a multi-DCI scenario, a specific beam failure detection procedure includes the following:
1. Two BFD-RS sets are explicitly configured or implicitly determined based on two groups of CORESETs corresponding to CORESET pool indexes 0 and 1.
2. Each BFD-RS set uses an independent BFD counter and timer.
3. If quality of resources in the BFD-RS set is lower than a threshold, a beam failure in the BFD-RS set is detected.
4. The base station pre-configures two candidate beam sets (referred to as q0,0 and q0,1 in the standard) associated with the two BFD-RS sets. When the UE detects a beam failure in one BFD-RS, the UE attempts to search for a qualified new beam in the candidate beam set associated with the BFD-RS set. In correspondence to the BFD-RS set, signaling for dynamically updating a beam failure detection set based on the MAC-CE is introduced into Rel-17, as shown in Table 1. R is a reserved bit. A serving cell ID is a serving cell identifier of a terminal. A BWP ID is a bandwidth part identifier of the terminal. A set 1 indicates a beam failure detection set used for a TRP 1. An S field indicates whether a BFD-RS ID₁ exists (where one TRP is associated with one or two BFD-RSs).

**Table 1**

| R | Serving cell ID | | BWP ID |
|---|---|---|---|
| R | S | Set 1: BFD-RS ID₀ | |
| R | R | Set 1: BFD-RS ID₁ | |
| R | S | Set 2: BFD-RS ID₀ | |
| R | R | Set 2: BFD-RS ID₁ | |

5. When a beam failure is detected in one BFD-RS set, a PUCCH associated with the BFD-RS set is sent to request an uplink UL resource (in other words, a PUSCH resource is requested through a PUCCH, and the PUSCH resource is used for carrying the MAC-CE in the above figure).
6. The MAC-CE is transmitted based on an UL grant, including a serving cell identifier serving cell ID, a beam failure recovery detection-reference signal set BFD-RS set ID, a new beam existence indication, and an ID of a new beam.

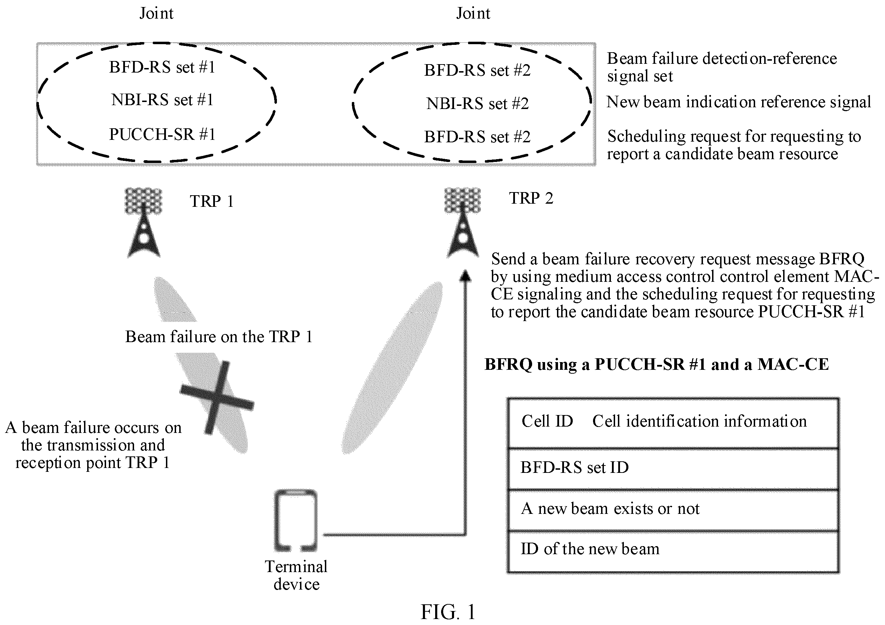

FIG. 1 is a diagram of an mTRP beam failure scenario. A BFD-RS represents a beam failure detection reference signal set. An NBI-RS represents a new beam indication reference signal (new beam indication reference signal) and indicates a candidate beam set. A PUCCH-SR represents a scheduling request used for requesting to report candidate beam resources. As shown in the figure, when a beam failure occurs on a TRP 1, UE may report, via a TRP 2, that a beam failure occurs on the TRP 1, and report a corresponding candidate beam (that is, an ID of a new beam in the figure).

In a conventional technology, for a beam detection design in an mTRP scenario, based on a solution in the conventional technology, a terminal can perform data communication with a base station by using two beams in the case of mTRPs, because only one beam is used for sending a DCI, a solution in Rel-15 (that is, the solution in the background) is still used for beam failure recovery in this scenario. However, if a unified beam (unified TCI) configuration framework is considered to be introduced, in S-DCI scheduling, two unified beams (referred to as indicated TCIs in the protocol) are still indicated to the terminal device, and for any CORESET, a reception beam may be determined based on one indicated common beam (indicated TCI). Because both the two common beams may be used for sending a control channel, if beam failure detection is performed based only on one beam, a beam failure detection resource of the other beam that can be used for sending the control channel cannot be determined.

It can be learned that the beam failure detection method introduced into the Rel-15 NR standard is not applicable to beam failure detection in a multi-TRP scenario.

To resolve the foregoing technical problem, embodiments of this application provide an uplink resource indication method. The following describes the method provided in embodiments of this application with reference to the accompanying drawings of this specification.

The communication method provided in embodiments of this application may be applied to various communication systems, for example, a long term evolution (long term evolution, LTE) system, a 5th generation (5th generation, 5G) mobile communication system, a wireless fidelity (wireless fidelity, Wi-Fi) system, a future communication system, or a system integrating a plurality of communication systems. This is not limited in embodiments of this application. 5G may also be referred to as new radio (new radio, NR).

The communication method provided in embodiments of this application may be applied to various communication scenarios, for example, may be applied to one or more of the following communication scenarios: enhanced mobile broadband (enhanced mobile broadband, eMBB), ultra-reliable low-latency communication (ultra-reliable low-latency communication, URLLC), machine type communications (machine type communications, MTC), massive machine type communications (massive machine type communications, mMTC), device to device (device to device, D2D), vehicle to everything (vehicle to everything, V2X), vehicle to vehicle (vehicle to vehicle, V2V), and an internet of things (internet of things, IoT).

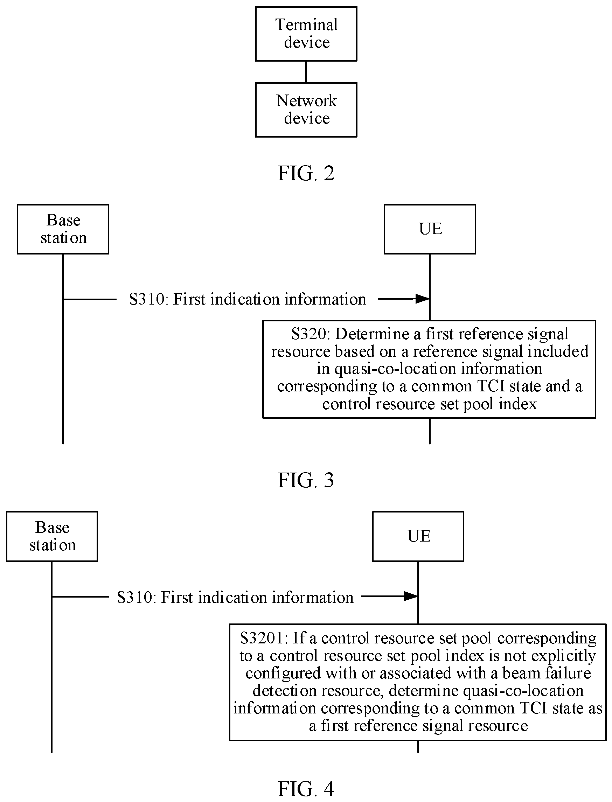

The following describes a communication method provided in embodiments of this application by using a communication system shown in FIG. 2 as an example.

FIG. 2 is a diagram of an architecture of a communication system according to an embodiment of this application. As shown in FIG. 2, the communication system may include a network device and a terminal device. FIG. 2 is merely an example framework diagram. Quantities of network devices, terminal devices, and cells included in FIG. 2 and a state of the terminal device are not limited. In addition to functional nodes shown in FIG. 2, other nodes such as a core network device, a gateway device, and an application server may be further included. This is not limited. The network device and the core network device communicate with each other in a wired or wireless manner, for example, through a next generation (next generation, NG) interface. In FIG. 2, an example in which there is a single network device and a single terminal device and the terminal device is UE is used for describing embodiments of this application.

Specifically, the network device may transmit data or control signaling to the UE, and the UE reports a measurement result (corresponding to a beam) of a reference signal based on network configuration information, to switch a serving beam of the UE. Scenarios may include the following:
Scenario 1: Inter-cell transmission model (that is, after reporting, the UE switches from a beam of a current cell to a beam of another cell):
   The UE measures a beam signal of a non-serving cell, and reports the beam signal to the current serving cell. After the beam switching based on a configuration, the UE receives a PDCCH/PDSCH from another cell but does not hand over the serving cell. With reference to the solutions of the present invention, two beams used by a terminal to receive a control channel may be sent by two TRPs of the non-serving cell and the serving cell.
Scenario 2: Transmission model within a cell (where the UE switches from a beam of a current cell to another beam of the current cell):
   The UE measures a reference signal of a non-serving beam of the current serving cell, and reports the reference signal to the current serving cell. The UE switches the serving beam to the reported beam based on a configuration. With reference to the solutions of the present invention, two beams used by a terminal to receive a control channel may be sent by two TRPs of the serving cell.

The network device is mainly configured to implement at least one of functions of the terminal device, such as resource scheduling, radio resource management, and radio resource control. Specifically, the network device may include any node of a base station, a wireless access point, a transmission and reception point (transmission and reception point, TRP), a transmission point (transmission point, TP), and another access node. In systems using different radio access technologies, names of network devices may be different, for example, a base transceiver station (base transceiver station, BTS) in a global system for mobile communications (global system for mobile communications, GSM) or a code division multiple access (code division multiple access, CDMA) network, an NB (NodeB) in wideband code division multiple access (wideband code division multiple access, WCDMA), and an eNB or an eNodeB (Evolved NodeB) in LTE (Long Term Evolution, long term evolution). Alternatively, the network device may be a radio controller in a CRAN (Cloud Radio Access Network, cloud radio access network) scenario. Alternatively, the network device may be a base station device in a future 5G network or a network device in a future evolved PLMN network. Alternatively, the network device may be a wearable device or a vehicle-mounted device. In embodiments of this application, an apparatus configured to implement a function of the network device may be a network device, or may be an apparatus that can support the network device in implementing the function, for example, a chip system. The apparatus may be installed in the network device or used together with the network device. In the technical solutions provided in embodiments of this application, the technical solutions provided in embodiments of this application are described by using an example in which the apparatus configured to implement the function of the network device is a base station.

The terminal device (terminal equipment) may be user equipment (user equipment, UE), a mobile station (mobile station, MS), a mobile terminal (mobile terminal, MT), or the like. Specifically, the terminal device may be a mobile phone (mobile phone), a tablet computer, or a computer having a wireless transceiver function, or may be a virtual reality (virtual reality, VR) terminal device, an augmented reality (augmented reality, AR) terminal device, a wireless terminal device in industrial control, a wireless terminal device in self-driving, a wireless terminal device in telemedicine, a wireless terminal device in a smart grid, a wireless terminal device in a smart city (smart city), a smart home, a vehicle-mounted terminal device, or the like. In embodiments of this application, an apparatus configured to implement a function of the terminal device may be a terminal device, or may be an apparatus that can support the terminal device in implementing the function, for example, a chip system. The apparatus may be installed in the terminal device or used together with the terminal device. The following describes the method provided in embodiments of this application by using an example in which the apparatus configured to implement the function of the terminal device is UE (where the UE communicates with the base station via multiple transmission and reception points TRPs of the base station).

Based on the communication system described in embodiments of this application, embodiments of this application further provide a communication method. FIG. 3 is a schematic flowchart of a communication method according to an embodiment of this application. As shown in FIG. 3, the method may include the following step:
S310: A base station sends first indication information to UE, and correspondingly, the UE receives the first indication information from the base station.

The first indication information indicates a common transmission configuration indicator TCI state. The common TCI state indicates a common beam. Different common TCI states correspond to different control resource set pool indexes.

In an embodiment, the first indication information includes activation signaling. The activation signaling is used for determining a common TCI state corresponding to the control resource set pool index, and the common TCI state corresponds to one TCI state or one group of TCI states.

The activation signaling may be a transmission configuration indicator state TCI state included by the base station in MAC-CE signaling, and the transmission configuration indicator state TCI state may be used for uplink sending and/or downlink receiving.

In an embodiment, the first indication information includes activation signaling and downlink control indication information. The activation information is used for determining a common TCI state corresponding to the control resource set pool index, and the common TCI state corresponds to a plurality of TCI states or a plurality of groups of TCI states. The downlink control indication information indicates one common TCI state or one group of common TCI states in the common TCI state or the plurality of groups of common TCI states, and is used for uplink sending and/or downlink receiving.

The activation signaling may be a plurality of transmission configuration indicator states TCI states carried by the base station by using MAC-CE signaling, and then the base station further indicates one target transmission configuration indicator state TCI state/one group of target transmission configuration indicator states TCI states in the plurality of transmission configuration indicator states TCI states based on the downlink control indication information. In this case, the target transmission configuration indicator state TCI state is used for uplink sending and/or downlink receiving.

In consideration of potential applications of coordinated multipoint transmission/reception in the case of different backhaul link capabilities and service requirement conditions, coordinated multipoint transmission/reception solutions in the R16 standard may include an S-DCI (Single-DCI) solution, an M-DCI (Multi-DCI) solution, and the like. In the S-DCI solution, a single PDCCH is used for scheduling one PDSCH. Different data layers of the PDSCH may be mapped to different TRPs or a same TRP, but each data layer cannot be mapped to different TRPs. The M-DCI solution is a transmission solution in which a plurality of PDCCHs are used for separately scheduling respective PDSCHs. In this case, each PDSCH is transmitted by using only one TRP.

In an M-DCI scenario, a beam failure detection resource may be determined through the following steps.

S320: The UE determines a first reference signal resource based on a reference signal included in quasi-co-location information corresponding to the common TCI state and the control resource set pool index.

The first reference signal resource is used for beam failure detection of a control resource set of the control resource set pool index corresponding to the common TCI state.

In this embodiment of this application, the base station first exchanges, with the UE, the first indication information indicating the common transmission configuration indicator TCI state, and then the UE determines the first reference signal resource based on the quasi-co-location information corresponding to the common TCI state and the control resource set pool index. This fills a gap in a method for determining a beam failure detection resource in a multi-TRP transmission mode.

In an embodiment, as shown in FIG. 4, S320 may include the following step:
S3201: If a control resource set pool corresponding to the control resource set pool index is not explicitly configured with or associated with a beam failure detection resource, the UE determines the quasi-co-location information corresponding to the common TCI state as the first reference signal resource.

In this scenario, a terminal is configured with the control resource set pool index by a network, but the control resource set pool corresponding to the control resource set pool index is not explicitly configured with the beam failure detection resource. This means that the terminal has a plurality of common beams for communication, and receives a control channel based on the plurality of common beams. This is an mTRP mode in M-DCI scheduling. In this case, the UE determines the first reference signal resource based on the reference signal included in the quasi-co-location information corresponding to the common TCI state and the control resource set pool index. Considering that different control resource set pool indexes correspond to different control resource set pools, control resource set pools corresponding to some control resource set pool indexes may not be explicitly configured with beam failure detection resources, and control resource set pools corresponding to other control resource set pool indexes may be explicitly configured with beam failure detection resources. In this case, quasi-co-location information corresponding to a corresponding common TCI state is determined as the first reference signal resource only when no beam failure detection resource is explicitly configured.

Further, a QCL type-D RS in the quasi-co-location information corresponding to the common TCI state is determined as the first reference signal resource.

Still further, if a separate TCI mode is used by a TRP corresponding to a case in which no beam failure detection resource is explicitly configured, a QCL type-D RS in quasi-co-location information corresponding to a DL TCI state is determined as the first reference signal resource. If a separate TCI mode is used by a TRP corresponding to a case in which no beam failure detection resource is explicitly configured, and the TRP corresponding to the case in which no beam failure detection resource is explicitly configured indicates only a UL TCI state that may be used for uplink transmission, beam failure detection is not performed on a control resource set with a corresponding control resource set pool index. Alternatively, if a separate TCI mode is used by a TRP corresponding to a case in which no beam failure detection resource is explicitly configured, the TRP corresponding to the case in which no beam failure detection resource is explicitly configured indicates only a UL TCI state that may be used for uplink transmission, and a reference source signal in the UL TCI state is a downlink reference signal, the downlink reference signal is determined as the first reference signal resource.

In this embodiment of this application, when the control resource set pool corresponding to the control resource set pool index is not explicitly configured with the beam failure detection resource, a method for determining a beam failure detection resource is designed, to fill a gap in a method for determining a beam failure detection resource in a corresponding scenario.

However, in an S-DCI scenario, a scenario of sending through an intra-frequency network SFN, or a repeated sending repetition scenario, a beam failure detection resource may be determined through the following steps.

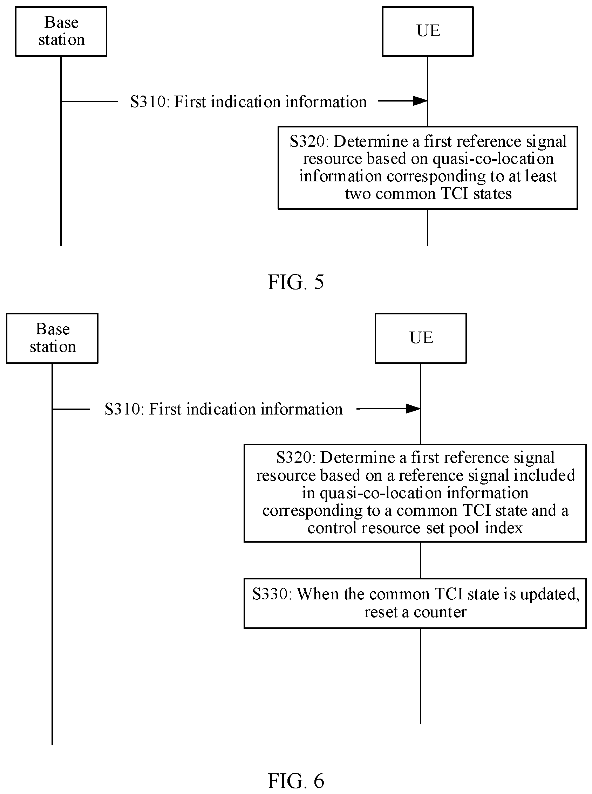

In an embodiment, as shown in FIG. 5, S320 may further include: The UE determines the first reference signal resource based on quasi-co-location information corresponding to at least two common TCI states.

In the S-DCI scenario, the first indication information indicates at least two common transmission configuration indicator TCI states, one of the at least two common TCI states is used for receiving one control resource set, and the terminal is not configured with a control resource set pool index by a network. This means that although the terminal has a plurality of common beams for communication, the terminal receives a control channel based only on one beam. This is an mTRP mode in S-DCI scheduling. In this case, the UE determines a reference signal included in quasi-co-location information corresponding to the common TCI state as the first reference signal resource.

In the SFN scenario, at least two common TCI states are used for simultaneously receiving one control resource set. In the repetition scenario, at least two common TCI states are respectively used for receiving different control resource sets, and the different control resource sets carry same information. In this case, the UE determines a reference signal included in quasi-co-location information corresponding to the common TCI state as the first reference signal resource.

Further, the UE determines a quasi-co-location type-D resource (QCL type-D RS) in the quasi-co-location information corresponding to the common TCI state as the first reference signal resource.

In this scenario, the first indication information includes activation signaling. The activation signaling indicates the at least two common TCI states, and the at least two common TCI states correspond to one TCI state or one group of TCI states. Alternatively, the first indication information includes activation signaling and downlink control indication information. The activation information indicates the at least two common TCI states, and the at least two common TCI states correspond to a plurality of TCI states or a plurality of groups of TCI states. The downlink control indication information indicates one common TCI state or one group of common TCI states in the common TCI state or the plurality of groups of common TCI states, and is used for uplink sending and/or downlink receiving.

The activation signaling may be a transmission configuration indicator state TCI state included by the base station in MAC-CE signaling, and the transmission configuration indicator state TCI state may be used for uplink sending and/or downlink receiving.

An example in which there are two common TCI states is used for description. If a beam mode used by at least one of two TRPs used for the S-DCI scheduling is a separate TCI mode, the UE determines a QCL type-D RS in quasi-co-location information corresponding to a separate downlink transmission configuration indicator state (separate DL TCI state) as the first reference signal resource. In an S-DCI mode, if one TRP indicates only an uplink TCI state, and the other TRP is in a joint beam mode (or is in a separate TCI mode but indicates a downlink TCI state), the UE determines quasi-co-location information corresponding to a downlink common TCI state or a joint common TCI state as the first reference signal resource.

An example in which there are two common TCI states in the mTRP mode in the S-DCI scheduling is used for description. The terminal separately determines QCL type-D RSs in quasi-co-location information corresponding to the two common TCI states as first reference signal resources corresponding to the two common TCI states, and the terminal separately performs beam failure detection based on the first reference signal resources corresponding to the two common TCI states. Alternatively, the terminal separately determines QCL type-D RSs in quasi-co-location information corresponding to the two TRPs as first reference signal resources corresponding to the two common TCI states, and the terminal separately performs beam failure detection based on the first reference signal resources corresponding to the two common TCI states. Alternatively, the terminal determines QCL type-D RSs in quasi-co-location information corresponding to the two common TCI states as the first reference signal resource, where the first reference signal resource includes a plurality of reference signals, and the terminal performs beam failure detection based on the first reference signal resource.

In this embodiment of this application, in different cases of the TRPs in the mTRP mode in the S-DCI scheduling, methods for determining beam failure detection resources are respectively designed, to fill a gap in a method for determining a beam failure detection resource in the mTRP mode in the S-DCI scheduling in a unified beam configuration framework.

Further, in the S-DCI scenario, the SFN scenario, or the repetition scenario, the determining a first reference signal resource based on quasi-co-location information corresponding to the common TCI state and the control resource set pool index in S320 may include:
determining quasi-co-location information corresponding to a 1^{st} common TCI state in the common TCI state as the first reference signal resource by default.

In this embodiment of this application, in the S-DCI scenario, the SFN scenario, or the repetition scenario, a method for determining a beam failure detection resource is designed, to fill a gap in a method for a beam failure detection resource in the unified beam configuration framework.

In an embodiment, as shown in FIG. 6, the method further includes the following step:
S330: When the common TCI state is updated, the UE resets a counter.

S330 is also applicable to the S-DCI scenario, the SFN scenario, the repetition scenario, or the M-DCI scenario.

Further, in the M-DCI scenario, when the common TCI state is updated, a counter corresponding to the common TCI state is reset, or a counter corresponding to the control resource set pool index is reset. In the S-DCI scenario, the SFN scenario, or the repetition scenario, when one or more of the at least two common TCI states are updated, a counter corresponding to an updated common TCI state is reset. That the common TCI state is updated may include: The common TCI state indicated by the first indication information is inconsistent with an identity of a common TCI state currently configured for the UE. Alternatively, the common TCI state indicated by the first indication information is different from a quasi-co-location type-D resource corresponding to a common TCI state currently configured for the UE.

In a communication scenario in which a counter needs to be reset, an example in which the base station communicates with the UE via two TRPs in the M-DCI scenario is used. The base station sends a beam indication on a CORESET associated with a CORESET pool corresponding to one of the TRPs, to indicate to update the common TCI state. In this case, for beam failure detection of the two TRPs, the following are separately determined:
If the UE performs S320 (where the UE is not explicitly configured with q0), the UE resets a counter BFI (because the TCI state is updated and a corresponding QCL type-D RS is changed).

If the UE is explicitly configured with q0, a BFI of a corresponding TRP is not reset when a unified TCI is switched (because q0 remains unchanged, to be specific, a beam failure detection reference signal remains unchanged).

In addition, if the UE receives a DCI indicating that beams of the two TRPs are updated, whether the BFI is reset is determined for both the two TRPs based on the foregoing rule.

In a possible implementation, in a scenario of the two TRPs in the S-DCI scheduling, if the base station indicates to update one of the common TCI states, and the terminal jointly determines the first reference signal resource by using QCL type-D RSs in quasi-co-location information corresponding to the two common TCI states, the UE resets the counter BFI.

In a possible implementation, in a scenario of the two TRPs in the S-DCI scheduling, if the base station indicates to update one of the common TCI states, and the terminal separately determines QCL type-D RSs in quasi-co-location information corresponding to the two common TCI states as first reference signal resources, the UE resets a counter BFI corresponding to the common TCI state, or the UE resets a counter BFI of the TRP corresponding to the common TCI state.

In this embodiment of this application, reset logic of the counter is designed regardless of the common TCI state is updated, to ensure that a beam failure detection mechanism can function effectively.

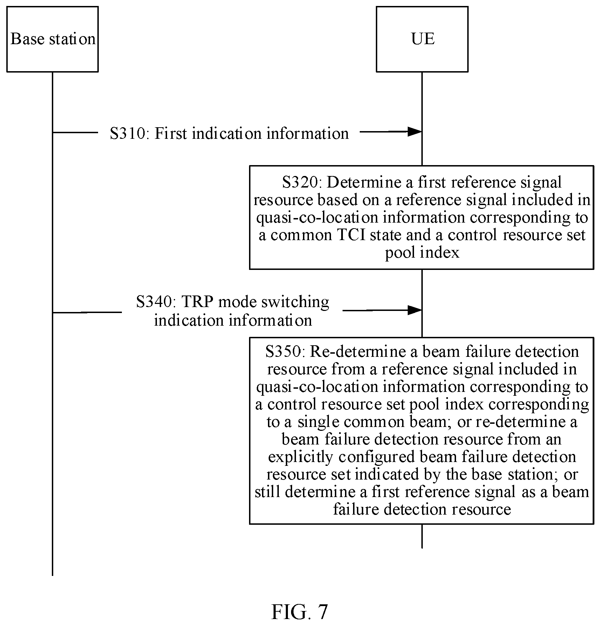

In an embodiment, this embodiment corresponds to the M-DCI scenario. As shown in FIG. 7, the method may further include the following steps.

S340: The UE receives TRP mode switching indication information from the base station.

The TRP mode switching indication information indicates the UE to switch from information transmission based on a plurality of common beams to information transmission based on a single common beam.

S350: The UE re-determines the beam failure detection resource from a reference signal included in quasi-co-location information corresponding to a control resource set pool index corresponding to the single common beam. Alternatively, the UE re-determines the beam failure detection resource from an explicitly configured beam failure detection resource set indicated by the base station. Alternatively, the UE still determines a first reference signal as the beam failure detection resource.

In this embodiment of this application, in a scenario in which the base station indicates the UE to switch from the information transmission based on the plurality of common beams to the information transmission based on the single common beam, a method for determining a beam failure detection resource is designed, to fill a gap in a method for determining a beam failure detection resource in a corresponding scenario.

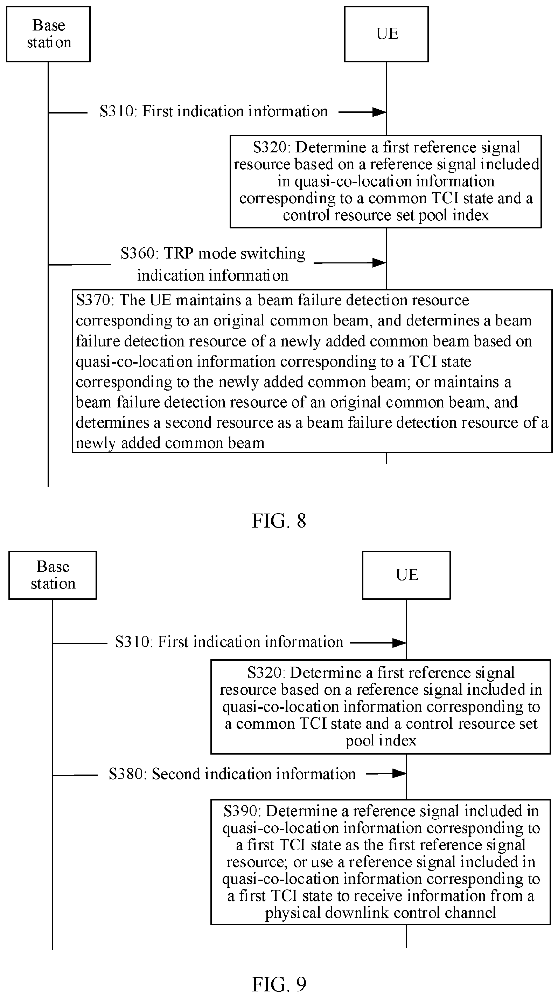

In an embodiment, this embodiment corresponds to the M-DCI scenario. As shown in FIG. 8, the method may further include the following steps.

S360: The UE receives TRP mode switching indication information from the base station.

The TRP mode switching indication information indicates to switch from information transmission based on a single common beam to information transmission based on a plurality of common beams, and the plurality of common beams include a newly added common beam and an original common beam.

S370: The UE maintains a beam failure detection resource corresponding to the original common beam, and determines a beam failure detection resource of the newly added beam based on quasi-co-location information corresponding to a common TCI state corresponding to the newly added beam; or maintains a beam failure detection resource of the original beam, and determines a second resource as a beam failure detection resource of the newly added beam.

The second resource is indicated by the base station to the UE by using resource indication information.

In this embodiment of this application, in a scenario in which the base station indicates the UE to switch from the information transmission based on the single common beam to the information transmission based on the plurality of common beams, a method for determining a beam failure detection resource is designed, to fill a gap in a method for determining a beam failure detection resource in a corresponding scenario.

In an embodiment, as shown in FIG. 9, the method may further include the following steps:
S380: The base station sends second indication information to the UE, and correspondingly, the UE receives the second indication information from the base station.
S390: The UE determines a reference signal included in quasi-co-location information corresponding to a first common TCI state as the first reference signal resource. Alternatively, the UE uses a reference signal included in quasi-co-location information corresponding to a first common TCI state to receive information from a physical downlink control channel.

S380 and S390 are applicable to both the M-DCI scenario and the S-DCI scenario. The second indication information indicates the first common TCI state in the common TCI state, and the second indication information is carried in RRC signaling or DCI signaling.

Further, the second indication information may be carried in the RRC signaling or the DCI signaling. In this scenario, the UE performs beam failure detection based only on a QCL type-D RS in the quasi-co-location information corresponding to the first common TCI state. If a TCI associated with the CORESET is reconfigured or updated, specifically, the base station indicates the UE to update a common beam (in other words, a beam used by the UE to receive a PDCCH is changed in S-DCI), the BFI is reset.

In this embodiment of this application, in the M-DCI mode, when the base station exchanges, with the UE, the second indication information indicating the first common TCI state in the common TCI state, a method for determining a beam failure detection resource is designed, to fill a gap in a method for determining a beam failure detection resource in a corresponding communication scenario in the unified beam configuration framework.

In an embodiment, for TRP mode switching in the S-DCI scenario, the SFN scenario, or the repetition scenario, a corresponding method for determining a beam failure detection resource is also designed. The method includes:
The UE receives TRP mode switching indication information from the base station.

The TRP mode switching indication information indicates the UE to switch from information transmission based on a plurality of common beams to information transmission based on a single common beam.

The UE re-determines a beam failure detection resource from a reference signal included in quasi-co-location information corresponding to the single common beam; or re-determines a beam failure detection resource from an explicitly configured beam failure detection resource set indicated by the network device; or still determines a first reference signal as a beam failure detection resource.

In addition, in a scenario in which the TRP mode switching indication information indicates the UE to switch from the information transmission based on the single common beam to the information transmission based on the plurality of common beams, the method may further include:
The UE receives the TRP mode switching indication information from the base station.

The TRP mode switching indication information indicates the UE to switch from the information transmission based on the single common beam to the information transmission based on the plurality of common beams.

In this case, the plurality of common beams include a newly added common beam and an original common beam. The UE maintains a beam failure detection resource corresponding to the original common beam, and determines a beam failure detection resource of the newly added beam based on reference signals included in quasi-co-location information corresponding to at least two common TCI states corresponding to the newly added beam.

In this embodiment of this application, in the S-DCI scenario, the SFN scenario, or the repetition scenario, the base station indicates the UE to switch from the information transmission based on the plurality of common beams to the information transmission based on the single common beam (or switch from the information transmission based on the single common beam to the information transmission based on the plurality of common beams), a method for determining a beam failure detection resource is designed, to fill a gap in a method for determining a beam failure detection resource in a corresponding scenario.

The foregoing mainly describes the solutions provided in embodiments of this application from a perspective of interaction between nodes. It may be understood that, to implement the foregoing functions, the nodes, for example, the network device and the terminal device, include a corresponding hardware structure and/or software module for performing the functions. A person skilled in the art should easily be aware that, in combination with algorithm steps of the examples described in embodiments disclosed in this specification, the methods in embodiments of this application can be implemented by hardware, software, or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of the network device and the terminal device may be divided based on the foregoing method examples. For example, each functional module may be divided corresponding to each function, or two or more functions may be integrated into one processing module. The integrated module may be implemented in a form of hardware, or may be implemented in a form of a software functional module. It should be noted that, in embodiments of this application, division of modules is an example, and is merely logical function division. In actual implementation, another division manner may be used.

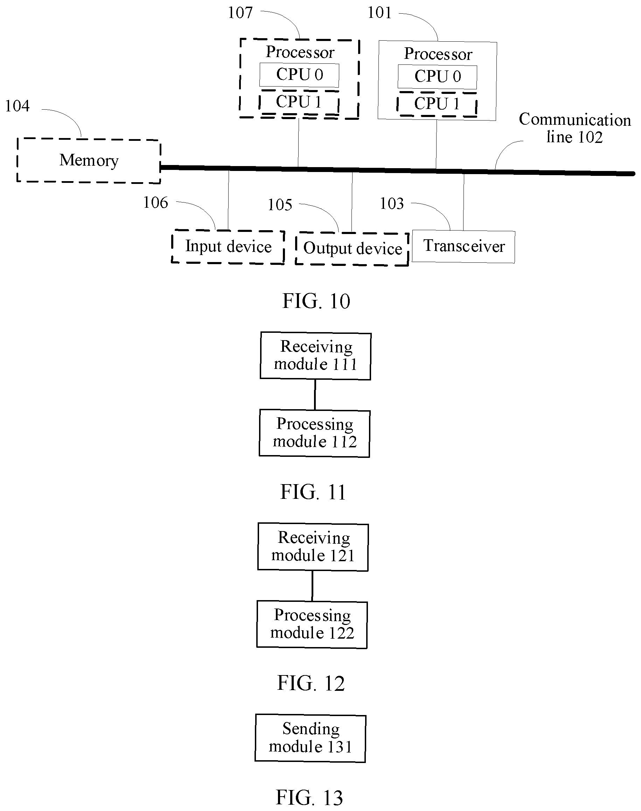

In specific implementation, network elements shown in this application, for example, the network device and the terminal device, may use a composition structure shown in FIG. 10 or include components shown in FIG. 10. FIG. 10 is a diagram of a structure of a communication apparatus according to an embodiment of this application. When the communication apparatus has the function of the network device in embodiments of this application, the communication apparatus may be a network device or a chip or a system-on-a-chip in a network device. When the communication apparatus has the function of the terminal device in embodiments of this application, the communication apparatus may be a terminal device or a chip or a system-on-a-chip in a terminal device.

As shown in FIG. 10, the communication apparatus may include a processor 101, a communication line 102, and a transceiver 103. The processor 101, a memory 104, and the transceiver 103 may be connected through the communication line 102. In an example, the processor 101 may include one or more CPUs, for example, a CPU0 and a CPU1 in FIG. 10.

In an optional implementation, the communication apparatus includes a plurality of processors. For example, the communication apparatus may further include a processor 107 in addition to the processor 101 in FIG. 10.

The processor 101 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 101 may be another apparatus having a processing function, for example, a circuit, a component, or a software module.

The communication line 102 is configured to transfer information between the components included in the communication apparatus.

The transceiver 103 is configured to communicate with another device or another communication network. The another communication network may be an ethernet, a radio access network (radio access network, RAN), a wireless local area network (wireless local area network, WLAN), or the like. The transceiver 103 may be an interface circuit, a pin, a radio frequency module, a transceiver, or any apparatus that can implement communication.

Further, the communication apparatus may include the memory 104. The memory 104 is configured to store instructions. The instructions may be a computer program.

The memory 104 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another optical disk storage, an optical disc storage, a magnetic disk storage medium, or another magnetic storage device. The optical disc storage includes a compressed optical disc, a laser disc, an optical disc, a digital versatile disc, a Blu-ray disc, or the like.

It should be noted that the memory 104 may exist independently of the processor 101, or may be integrated with the processor 101. The memory 104 may be configured to store instructions, program code, some data, or the like. The memory 104 may be located inside the communication apparatus, or may be located outside the communication apparatus. This is not limited. When executing the instructions stored in the memory 104, the processor 101 may implement the method provided in embodiments of this application.

In an optional implementation, the communication apparatus further includes an output device 105 and an input device 106. For example, the input device 106 is a device such as a keyboard, a mouse, a microphone, or a joystick, and the output device 105 is a device such as a display screen or a speaker (speaker).

It should be noted that the communication apparatus may be a desktop computer, a portable computer, a network server, a mobile phone, a tablet computer, a wireless terminal, an embedded device, a chip system, or a device having a structure similar to that in FIG. 10. In addition, the composition structure shown in FIG. 10 does not constitute a limitation on the communication apparatus. In addition to the components shown in FIG. 10, the communication apparatus may include more or fewer components than those shown in the figure, or some components may be combined, or different component arrangements may be used.

In this embodiment of this application, the chip system may include a chip, or may include a chip and another discrete component.

FIG. 11 is a diagram of a structure of a communication apparatus. The communication apparatus is used in a terminal device. The terminal device communicates with a network device via multiple transmission and reception points TRPs of the network device. Modules in the apparatus shown in FIG. 11 have functions of implementing corresponding steps in FIG. 3 to FIG. 9, and can achieve corresponding technical effects. For beneficial effects corresponding to steps performed by the modules, refer to descriptions of the corresponding steps in FIG. 3 to FIG. 9. Details are not described again. The functions may be implemented by hardware, or may be implemented by hardware executing corresponding software. The hardware or the software includes one or more modules corresponding to the foregoing functions. For example, the communication apparatus includes:
a receiving module 111, configured to receive first indication information from the network device, where
the first indication information indicates a common transmission configuration indicator TCI state, the common TCI state indicates a common beam, and different common TCI states correspond to different control resource set pool indexes; and
a processing module 112, configured to determine a first reference signal resource based on quasi-co-location information corresponding to the common TCI state and the control resource set pool index, where
the first reference signal resource is used for beam failure detection.

In an embodiment, if a control resource set pool corresponding to the control resource set pool index is not explicitly configured with a beam failure detection resource, the processing module 112 is specifically configured to determine a reference signal included in the quasi-co-location information corresponding to the common TCI state as the first reference signal resource.

In an embodiment, when the common TCI state is updated, the processing module 112 is further configured to reset a counter.

In an embodiment, the receiving module 111 is further configured to receive TRP mode switching indication information from the network device.

The TRP mode switching indication information indicates the terminal device to switch from information transmission based on a plurality of common beams to information transmission based on a single common beam.

The processing module 112 is further configured to re-determine the beam failure detection resource from quasi-co-location information corresponding to a control resource set pool index corresponding to the single common beam. Alternatively, the processing module 112 is further configured to re-determine the beam failure detection resource from an explicitly configured beam failure detection resource set indicated by the network device. Alternatively, the processing module 112 is further configured to still determine a first reference signal as the beam failure detection resource.

In an embodiment, the receiving module 111 is further configured to receive TRP mode switching indication information from the network device.

The TRP mode switching indication information indicates to switch from information transmission based on a single common beam to information transmission based on a plurality of common beams, and the plurality of common beams include a newly added common beam and an original common beam.

The processing module 112 is further configured to: maintain a beam failure detection resource corresponding to the original common beam, and determine a beam failure detection resource of the newly added beam based on quasi-co-location information corresponding to a common TCI state corresponding to the newly added beam.

Alternatively, the processing module 112 is further configured to: maintain a beam failure detection resource of the original beam, and determine a second resource as a beam failure detection resource of the newly added beam.

The second resource is indicated by the network device to the terminal device by using resource indication information.

In an embodiment, the receiving module 111 is further configured to receive second indication information from the network device.

The second indication information indicates a first common TCI state in the common TCI state.

The processing module 112 is further configured to determine a reference signal included in quasi-co-location information corresponding to the first common TCI state as the first reference signal resource.

Alternatively, the processing module 112 is further configured to use a reference signal included in quasi-co-location information corresponding to the first common TCI state to receive information from a physical downlink control channel.

The second indication information is carried in RRC signaling or DCI signaling.

FIG. 12 is a diagram of a structure of a communication apparatus. The communication apparatus is used in a terminal device. The terminal device communicates with a network device via multiple transmission and reception points TRPs of the network device. Modules in the apparatus shown in FIG. 12 have functions of implementing corresponding steps in FIG. 3 to FIG. 9, and can achieve corresponding technical effects. For beneficial effects corresponding to steps performed by the modules, refer to descriptions of the corresponding steps in FIG. 3 to FIG. 9. Details are not described again. The functions may be implemented by hardware, or may be implemented by hardware executing corresponding software. The hardware or the software includes one or more modules corresponding to the foregoing functions. For example, the communication apparatus includes:
a receiving module 121, configured to receive first indication information from the network device; and
a processing module 122, configured to determine a first reference signal resource based on quasi-co-location information corresponding to a common TCI state.

The first reference signal resource is used for beam failure detection.

In an embodiment, the processing module 122 is configured to determine quasi-co-location information corresponding to a 1^{st} common TCI state in a plurality of common TCI states as the first reference signal resource by default.

In an embodiment, when the common TCI state is updated, the processing module 122 is further configured to reset a counter.

In an embodiment, the receiving module 121 is further configured to receive TRP mode switching indication information from the network device.

The TRP mode switching indication information indicates the terminal device to switch from information transmission based on a plurality of common beams to information transmission based on a single common beam.

The processing module 122 is configured to: re-determine a beam failure detection resource from a reference signal included in quasi-co-location information corresponding to the single common beam; or re-determine a beam failure detection resource from an explicitly configured beam failure detection resource set indicated by the network device; or still determine a first reference signal as a beam failure detection resource.

In an embodiment, the receiving module 121 is further configured to receive TRP mode switching indication information from the network device.

The TRP mode switching indication information indicates to switch from information transmission based on a single common beam to information transmission based on a plurality of common beams, and the plurality of common beams include a newly added common beam and an original common beam.

The processing module 122 is configured to: maintain a beam failure detection resource corresponding to the original common beam, and determine a beam failure detection resource of the newly added beam based on reference signals included in quasi-co-location information corresponding to at least two common TCI states corresponding to the newly added beam.

A second resource is indicated by the network device to the terminal device by using resource indication information.

In an embodiment, the receiving module 121 is further configured to receive second indication information from the network device.

The second indication information indicates a first common TCI state in the common TCI state.

The processing module 122 is further configured to determine a reference signal included in quasi-co-location information corresponding to the first common TCI state as the first reference signal resource.

Alternatively, the processing module 122 is further configured to use a reference signal included in quasi-co-location information corresponding to the first common TCI state to receive information from a physical downlink control channel.

The second indication information is carried in RRC signaling or DCI signaling.

FIG. 13 is a diagram of a structure of a communication apparatus. The communication apparatus is used in a network device. A terminal device communicates with the network device via multiple transmission and reception points TRPs of the network device. Modules in the apparatus shown in FIG. 13 have functions of implementing corresponding steps in FIG. 3 to FIG. 9, and can achieve corresponding technical effects. For beneficial effects corresponding to steps performed by the modules, refer to descriptions of the corresponding steps in FIG. 3 to FIG. 9. Details are not described again. The functions may be implemented by hardware, or may be implemented by hardware executing corresponding software. The hardware or the software includes one or more modules corresponding to the foregoing functions. For example, the communication apparatus includes:
a sending module 131, configured to send first indication information to a terminal device, where
the first indication information indicates a common transmission configuration indicator TCI state, the common TCI state indicates a common beam, and different common TCI states correspond to different control resource set pool indexes.

In an embodiment, the first indication information includes activation signaling, the activation signaling is used for determining the common TCI state corresponding to the control resource set pool index, and the common TCI state corresponds to one TCI state or one group of TCI states. Alternatively, the first indication information includes activation signaling and downlink control indication information, the activation information is used for determining the common TCI state corresponding to the control resource set pool index, the common TCI state corresponds to a plurality of TCI states or a plurality of groups of TCI states, and the downlink control indication information indicates one common TCI state or one group of common TCI states in the plurality of common TCI states or the plurality of groups of common TCI states.

In an embodiment, the sending module 131 is further configured to send TRP mode switching indication information to the terminal device.

The TRP mode switching indication information indicates the terminal device to switch from information transmission based on a plurality of common beams to information transmission based on a single common beam, or the TRP mode switching indication information indicates to switch from information transmission based on a single common beam to information transmission based on a plurality of common beams.

In an embodiment, when the TRP mode switching indication information indicates to switch from the information transmission based on the single common beam to the information transmission based on the plurality of common beams, the sending module 131 is further configured to send resource indication information to the terminal device, where the resource indication information indicates a second resource used by the terminal device to determine a beam failure detection resource.

In an embodiment, the sending module 131 is further configured to send second indication information to the terminal device.

The second indication information indicates a first common TCI state in the common TCI state. The second indication information is carried in RRC signaling or DCI signaling.

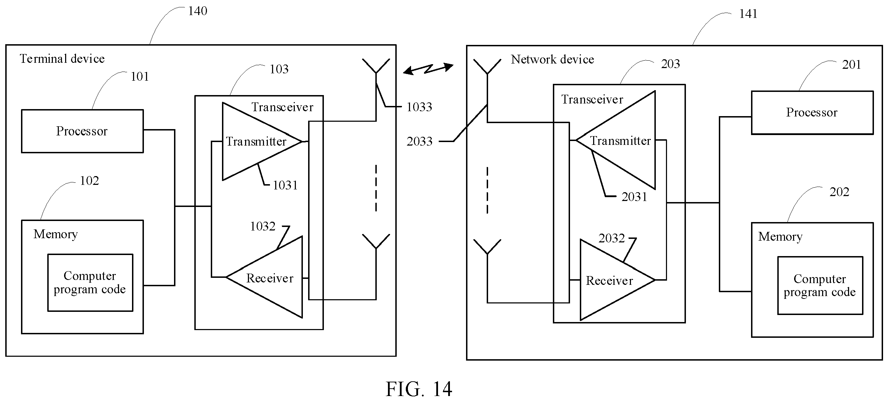

FIG. 14 is a diagram of a structure of a communication system according to an embodiment of this application. The communication system is a communication system corresponding to a scenario for determining a beam failure detection resource. As shown in FIG. 14, the communication system may include a terminal device 140 and a network device 141. The terminal device 140 may have the function of the communication apparatus described in FIG. 11, and the network device 141 may have the function of the communication apparatus described in FIG. 12. The terminal device 140 and the network device 141. The terminal device 140 may have a function of the foregoing communication apparatus 700, and the network device 141 may have a function of the foregoing communication apparatus 800. The terminal device 140 includes a processor 101, a memory 102, and a transceiver 103. The transceiver 103 includes a transmitter 1031, a receiver 1032, and an antenna 1033. The network device 141 includes a processor 201, a memory 202, and a transceiver 203. The transceiver 203 includes a transmitter 2031, a receiver 2032, and an antenna 2033. The receiver 1032 may be configured to receive transmission control information through the antenna 1033, and the transmitter 1031 may be configured to send transmission feedback information to the network device 141 through the antenna 1033. The transmitter 2031 may be configured to send transmission control information to the terminal device 140 through the antenna 2033, and the receiver 2032 may be configured to receive, through the antenna 2033, transmission feedback information sent by the terminal device 140.

An embodiment of this application further provides a computer-readable storage medium. All or some of procedures in the foregoing method embodiments may be implemented by a computer program instructing relevant hardware. The program may be stored in the foregoing computer-readable storage medium. When the program is executed, the procedures in the foregoing method embodiments may be performed. The computer-readable storage medium may be an internal storage unit of a terminal apparatus in any one of the foregoing embodiments, for example, including a data transmit end and/or a data receive end, for example, a hard disk or an internal memory of the terminal apparatus. The computer-readable storage medium may alternatively be an external storage device of the terminal apparatus, for example, a plug-in hard disk, a smart media card (smart media card, SMC), a secure digital (secure digital, SD) card, or a flash card (flash card) that is configured on the terminal apparatus. Further, the computer-readable storage medium may include both an internal storage unit and an external storage device of the terminal apparatus. The computer-readable storage medium is configured to store the computer program and other programs and data that are needed by the terminal apparatus. The computer-readable storage medium may be further configured to temporarily store data that has been output or is to be output.

An embodiment of this application further provides computer instructions. All or some of procedures in the foregoing method embodiment may be completed by the computer instructions instructing relevant hardware (for example, a computer, a processor, a network device, and a terminal). The program may be stored in the foregoing computer-readable storage medium.

An embodiment of this application further provides a chip system. The chip system may include a chip, or may include a chip and another discrete component. This is not limited. The chip system includes a processor and a transceiver. All or some of procedures in the foregoing method embodiments may be completed by the chip system. For example, the chip system may be configured to implement the function performed by the network device in the foregoing method embodiments, or implement the function performed by the terminal device in the foregoing method embodiments.

In a possible design, the chip system further includes a memory. The memory is configured to store program instructions and/or data. When the chip system runs, the processor executes the program instructions stored in the memory, to enable the chip system to perform the function performed by the network device in the foregoing method embodiments or perform the function performed by the terminal device in the foregoing method embodiments.

In embodiments of this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed and completed by a hardware processor, or may be performed and completed by using a combination of hardware and software modules in the processor.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can be used to carry or store expected program code in a form of instructions or a data structure and that can be accessed by a computer, but is not limited thereto. The memory in embodiments of this application may alternatively be a circuit or any other apparatus that can implement a storage function, and is configured to store instructions and/or data.

It should be noted that in the specification, claims, and accompanying drawings of this application, the terms "first", "second", and the like are intended to distinguish between different objects, but are not intended to describe a particular sequence. In addition, the terms "including" and "having" and any other variants thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in embodiments of this application, a plurality of common beams used for communication of a plurality of TRPs may be understood as a plurality of TCI states. A TRP may not be an explicitly defined concept or may be invisible to a terminal. Therefore, the terminal needs to determine, based on a correspondence, a TRP for which the common beam is used in the plurality of TRPs. A corresponding method includes but is not limited to: associating the common beam with a control resource set pool index, a control resource set, or a control resource set group including one or more control resource sets. Alternatively, a base station uses a common TCI state set including one or common TCI state for communication of one TRP, and the common beam is determined from the common TCI state set.

It should be understood that, in embodiments of this application, "at least one (item)" means one or more, "plurality of" means two or more, "at least two (items)" means two, three, or more, and "and/or" is used to describe an association relationship between associated objects and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate: a, b, c, "a and b", "a and c", "b and c", or "a, b, and c", where a, b, and c may be singular or plural. It should be understood that in embodiments of this application, "B corresponding to A" indicates that B is associated with A. For example, B may be determined based on A. It should be further understood that determining B based on A does not mean that B is determined based only on A, and B may alternatively be determined based on A and/or other information. **In** addition, "connection" in embodiments of this application means various connection manners such as a direct connection or an indirect connection, for implementing communication between devices. This is not limited in embodiments of this application.

Unless otherwise specified, "transmission" (transmit/transmission) in embodiments of this application means bidirectional transmission, and includes a sending action and/or a receiving action. Specifically, "transmission" in embodiments of this application includes data sending, data receiving, or data sending and receiving. **In** other words, data transmission herein includes uplink data transmission and/or downlink data transmission. Data may include a channel and/or a signal. The uplink data transmission is uplink channel transmission and/or uplink signal transmission, and the downlink data transmission is downlink channel transmission and/or downlink signal transmission. In embodiments of this application, a "network" and a "system" express the same concept, and a communication system is a communication network.

The foregoing descriptions about implementations allow a person skilled in the art to understand that, for the purpose of convenient and brief description, division of the foregoing functional modules is used as an example for illustration. In actual application, the foregoing functions can be allocated to different functional modules for implementation based on a requirement, that is, an inner structure of an apparatus is divided into different functional modules to implement all or some of the functions described above.

In the several embodiments provided in this application, it should be understood that the disclosed apparatus and method may be implemented in other manners. For example, the foregoing described apparatus embodiments are merely examples. For example, division of the modules or units is merely logical function division. In actual implementation, another division manner may be used. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may be or may not be physically separate, and parts displayed as units may be one or more physical units, may be located in one place, or may be distributed on different places. Some or all of the units may be selected based on actual needs to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit. When the integrated unit is implemented in the form of a software functional unit and sold or used as an independent product, the integrated unit may be stored in a readable storage medium. Based on such understanding, the technical solutions in embodiments of this application essentially, or some of the technical solutions that contribute to a conventional technology, or all or some of the technical solutions may be embodied in a form of a software product. The software product is stored in a storage medium, and includes several instructions for instructing a device, for example, a single-chip microcomputer, a chip, or a processor (processor), to perform all or some of the steps of the methods in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, applied to a terminal device, wherein the terminal device communicates with a network device via multiple transmission and reception points TRPs of the network device, and the method comprises:
receiving first indication information from the network device, wherein the first indication information indicates a common transmission configuration indicator TCI state, and different common TCI states correspond to different control resource set pool indexes; and
determining a first reference signal resource based on a reference signal comprised in quasi-co-location information corresponding to the common TCI state and the control resource set pool index, wherein the first reference signal resource is used for beam failure detection.

2. The communication method according to claim 1, wherein the first indication information comprises activation signaling, the activation signaling is used for determining the common TCI state corresponding to the control resource set pool index, and the common TCI state corresponds to one TCI state or one group of TCI states; or
the first indication information comprises activation signaling and downlink control indication information, the activation information is used for determining the common TCI state corresponding to the control resource set pool index, the common TCI state corresponds to a plurality of TCI states or a plurality of groups of TCI states, and the downlink control indication information indicates one common TCI state or one group of common TCI states in the plurality of common TCI states or the plurality of groups of common TCI states.

3. The communication method according to claim 1 or 2, wherein the determining a first reference signal resource based on a reference signal comprised in quasi-co-location information corresponding to the common TCI state and the control resource set pool index comprises:
if a control resource set pool corresponding to the control resource set pool index is not explicitly configured with or associated with a beam failure detection resource, determining the reference signal comprised in the quasi-co-location information corresponding to the common TCI state as the first reference signal resource.

4. The communication method according to claim 3, wherein the method further comprises:
when the common TCI state is updated, resetting a counter corresponding to the common TCI state, or resetting a counter corresponding to the control resource set pool index.

5. The communication method according to claim 4, wherein that the common TCI state is updated comprises:
the common TCI state indicated by the first indication information is inconsistent with an identifier of a common TCI state currently used by the terminal device for information transmission; or
the common TCI state indicated by the first indication information is different from a reference signal comprised in quasi-co-location type-D information corresponding to a common TCI state currently used by the terminal device for information transmission.

6. The communication method according to any one of claims 1 to 5, wherein the method further comprises:
receiving TRP mode switching indication information from the network device, wherein the TRP mode switching indication information indicates the terminal device to switch from information transmission based on a plurality of common beams to information transmission based on a single common beam; and
re-determining the beam failure detection resource from a reference signal comprised in quasi-co-location information corresponding to a control resource set pool index corresponding to the single common beam; or re-determining the beam failure detection resource from an explicitly configured beam failure detection resource set indicated by the network device; or still determining a first reference signal as the beam failure detection resource.

7. The communication method according to any one of claims 1 to 5, wherein the method further comprises:
receiving TRP mode switching indication information from the network device, wherein the TRP mode switching indication information indicates to switch from information transmission based on a single common beam to information transmission based on a plurality of common beams, and the plurality of common beams comprise a newly added common beam and an original common beam; and
maintaining a beam failure detection resource corresponding to the original common beam, and determining a beam failure detection resource of the newly added beam based on a reference signal comprised in quasi-co-location information corresponding to a common TCI state corresponding to the newly added beam; or
maintaining a beam failure detection resource of the original beam, and determining a second resource as a beam failure detection resource of the newly added beam, wherein the second resource is indicated by the network device to the terminal device by using resource indication information.

8. The communication method according to claim 1, 2, 3, or 7, wherein the method further comprises:
receiving second indication information from the network device, wherein the second indication information indicates a first common TCI state in the common TCI state; and
determining a reference signal comprised in quasi-co-location information corresponding to the first common TCI state as the first reference signal resource; or
using a reference signal comprised in quasi-co-location information corresponding to the first common TCI state to receive information from a physical downlink control channel, wherein the second indication information is carried in RRC signaling or DCI signaling.

9. A communication method, applied to a terminal device, wherein the terminal device communicates with a network device via multiple transmission and reception points TRPs of the network device, and the method comprises:
receiving first indication information from the network device, wherein the first indication information indicates at least two common transmission configuration indicator TCI states, and one of the at least two common TCI states is used for receiving one control resource set, or the at least two common TCI states are used for simultaneously receiving one control resource set, or the at least two common TCI states are respectively used for receiving different control resource sets, and the different control resource sets carry same information; and
determining a first reference signal resource based on reference signals comprised in quasi-co-location information corresponding to the at least two common TCI states, wherein the first reference signal resource is used for beam failure detection.

10. The communication method according to claim 9, wherein the first indication information comprises activation signaling, the activation signaling indicates the at least two common TCI states, and the at least two common TCI states correspond to one common TCI state or one group of common TCI states; or
the first indication information comprises activation signaling and downlink control indication information, the activation information indicates the at least two common TCI states, the at least two common TCI states correspond to a plurality of common TCI states or a plurality of groups of common TCI states, and the downlink control indication information indicates one common TCI state or one group of common TCI states in the plurality of common TCI states or the plurality of groups of common TCI states.

11. The communication method according to claim 9 or 10, wherein the determining a first reference signal resource based on reference signals comprised in quasi-co-location information corresponding to the at least two common TCI states comprises:
determining a reference signal comprised in quasi-co-location information corresponding to a 1^{st} common TCI state in the at least two common TCI states as the first reference signal resource by default; or
determining the quasi-co-location information corresponding to the at least two common TCI states as the first reference signal resource.

12. The communication method according to claim 11, wherein the method further comprises:
when one or more of the at least two common TCI states are updated, resetting a counter corresponding to an updated common TCI state.

13. The communication method according to claim 12, wherein that the at least two common TCI states are updated comprises:
the at least two common TCI states indicated by the first indication information are inconsistent with an identifier of a common TCI state currently used by the terminal device for information transmission; or
the at least two common TCI states indicated by the first indication information are different from a reference signal comprised in quasi-co-location type-D information corresponding to a common TCI state currently used by the terminal device for information transmission.

14. The communication method according to any one of claims 9 to 13, wherein the method further comprises:
receiving TRP mode switching indication information from the network device, wherein the TRP mode switching indication information indicates the terminal device to switch from information transmission based on a plurality of common beams to information transmission based on a single common beam; and
re-determining the beam failure detection resource from a reference signal comprised in quasi-co-location information corresponding to the single common beam; or re-determining the beam failure detection resource from an explicitly configured beam failure detection resource set indicated by the network device; or still determining a first reference signal as the beam failure detection resource.

15. The communication method according to any one of claims 9 to 13, wherein the method further comprises:
receiving TRP mode switching indication information from the network device, wherein the TRP mode switching indication information indicates to switch from information transmission based on a single common beam to information transmission based on a plurality of common beams, and the plurality of common beams comprise a newly added common beam and an original common beam; and
maintaining a beam failure detection resource corresponding to the original common beam, and determining a beam failure detection resource of the newly added beam based on reference signals comprised in quasi-co-location information corresponding to at least two common TCI states corresponding to the newly added beam.

16. The communication method according to claim 9, 10, 11, or 15, wherein the method further comprises:
receiving second indication information from the network device, wherein the second indication information indicates a first common TCI state in the at least two common TCI states; and
determining a reference signal comprised in quasi-co-location information corresponding to the first common TCI state as the first reference signal resource; or
using a reference signal comprised in quasi-co-location information corresponding to the first common TCI state to receive information from a physical downlink control channel, wherein the second indication information is carried in RRC signaling or DCI signaling.

17. A communication method, applied to a network device, wherein a terminal device communicates with the network device via multiple transmission and reception points TRPs of the network device, and the method comprises:
sending first indication information to the terminal device, wherein the first indication information indicates a common transmission configuration indicator TCI state, and different common TCI states correspond to different control resource set pool indexes.

18. The communication method according to claim 17, wherein the first indication information comprises activation signaling, the activation signaling is used for determining the common TCI state, and the common TCI state corresponds to one TCI state or one group of TCI states; or
the first indication information comprises activation signaling and downlink control indication information, the activation information is used for determining the common TCI state, the common TCI state corresponds to a plurality of TCI states or a plurality of groups of TCI states, and the downlink control indication information indicates one common TCI state or one group of common TCI states in the plurality of common TCI states or the plurality of groups of common TCI states.

19. The communication method according to claim 17 or 18, wherein the method further comprises:
sending TRP mode switching indication information to the terminal device, wherein the TRP mode switching indication information indicates the terminal device to switch from information transmission based on a plurality of common beams to information transmission based on a single common beam, or the TRP mode switching indication information indicates to switch from information transmission based on a single common beam to information transmission based on a plurality of common beams.

20. The communication method according to claim 19, wherein the method further comprises:
when the TRP mode switching indication information indicates to switch from the information transmission based on the single common beam to the information transmission based on the plurality of common beams, sending resource indication information to the terminal device, wherein the resource indication information indicates a second resource used by the terminal device to determine a beam failure detection resource.

21. The communication method according to claim 17, wherein the method further comprises:
sending second indication information to the terminal device, wherein the second indication information indicates a first common TCI state in the common TCI state, and the second indication information is carried in RRC signaling or DCI signaling.

22. A communication apparatus, used in a terminal device, wherein the terminal device communicates with a network device via multiple transmission and reception points TRPs of the network device, and the apparatus comprises:
a transceiver module, configured to receive first indication information from the network device, wherein the first indication information indicates a common transmission configuration indicator TCI state, and different common TCI states correspond to different control resource set pool indexes; and
a processing module, configured to determine a first reference signal resource based on a reference signal comprised in quasi-co-location information corresponding to the common TCI state and the control resource set pool index, wherein the first reference signal resource is used for beam failure detection.

23. The communication apparatus according to claim 22, wherein the first indication information comprises activation signaling, the activation signaling is used for determining the common TCI state corresponding to the control resource set pool index, and the common TCI state corresponds to one TCI state or one group of TCI states; or
the first indication information comprises activation signaling and downlink control indication information, the activation information is used for determining the common TCI state corresponding to the control resource set pool index, the common TCI state corresponds to a plurality of TCI states or a plurality of groups of TCI states, and the downlink control indication information indicates one common TCI state or one group of common TCI states in the plurality of common TCI states or the plurality of groups of common TCI states.

24. The communication apparatus according to claim 22 or 23, wherein the processing module is specifically configured to:
if a control resource set pool corresponding to the control resource set pool index is not explicitly configured with or associated with a beam failure detection resource, determine the reference signal comprised in the quasi-co-location information corresponding to the common TCI state as the first reference signal resource.

25. The communication apparatus according to claim 24, wherein the processing module is further configured to:
when the common TCI state is updated, reset a counter corresponding to the common TCI state, or reset a counter corresponding to the control resource set pool index.

26. The communication apparatus according to claim 25, wherein that the common TCI state is updated comprises:
the common TCI state indicated by the first indication information is inconsistent with an identifier of a common TCI state currently used by the terminal device for information transmission; or
the common TCI state indicated by the first indication information is different from a reference signal comprised in quasi-co-location type-D information corresponding to a common TCI state currently used by the terminal device for information transmission.

27. The communication apparatus according to any one of claims 22 to 26, wherein the transceiver module is further configured to:
receive TRP mode switching indication information from the network device, wherein the TRP mode switching indication information indicates the terminal device to switch from information transmission based on a plurality of common beams to information transmission based on a single common beam; and
the processing module is further configured to: re-determine the beam failure detection resource from a reference signal comprised in quasi-co-location information corresponding to a control resource set pool index corresponding to the single common beam; or re-determine the beam failure detection resource from an explicitly configured beam failure detection resource set indicated by the network device; or still determine a first reference signal as the beam failure detection resource.

28. The communication apparatus according to any one of claims 22 to 26, wherein the receiving module is further configured to:
receive TRP mode switching indication information from the network device, wherein the TRP mode switching indication information indicates to switch from information transmission based on a single common beam to information transmission based on a plurality of common beams, and the plurality of common beams comprise a newly added common beam and an original common beam; and
the processing module is further configured to: maintain a beam failure detection resource corresponding to the original common beam, and determine a beam failure detection resource of the newly added beam based on a reference signal comprised in quasi-co-location information corresponding to a common TCI state corresponding to the newly added beam; or
the processing module is further configured to: maintain a beam failure detection resource of the original beam, and determine a second resource as a beam failure detection resource of the newly added beam, wherein the second resource is indicated by the network device to the terminal device by using resource indication information.

29. The communication apparatus according to claim 22, 23, 24, or 28, wherein the transceiver module is further configured to:
receive second indication information from the network device, wherein the second indication information indicates a first common TCI state in the common TCI state; and
the processing module is further configured to determine a reference signal comprised in quasi-co-location information corresponding to the first common TCI state as the first reference signal resource; or
the processing module is further configured to use a reference signal comprised in quasi-co-location information corresponding to the first common TCI state to receive information from a physical downlink control channel, wherein the second indication information is carried in RRC signaling or DCI signaling.

30. A communication apparatus, used in a terminal device, wherein the terminal device communicates with a network device via multiple transmission and reception points TRPs of the network device, and the apparatus comprises:
a transceiver module, configured to receive first indication information from the network device, wherein the first indication information indicates at least two common transmission configuration indicator TCI states, and one of the at least two common TCI states is used for receiving one control resource set, or the at least two common TCI states are used for simultaneously receiving one control resource set, or the at least two common TCI states are respectively used for receiving different control resource sets, and the different control resource sets carry same information; and
a processing module, configured to determine a first reference signal resource based on reference signals comprised in quasi-co-location information corresponding to the at least two common TCI states, wherein the first reference signal resource is used for beam failure detection.

31. The communication apparatus according to claim 30, wherein the first indication information comprises activation signaling, the activation signaling indicates the at least two common TCI states, and the at least two common TCI states correspond to one common TCI state or one group of common TCI states; or
the first indication information comprises activation signaling and downlink control indication information, the activation information indicates the at least two common TCI states, the at least two common TCI states correspond to a plurality of common TCI states or a plurality of groups of common TCI states, and the downlink control indication information indicates one common TCI state or one group of common TCI states in the plurality of common TCI states or the plurality of groups of common TCI states.

32. The communication apparatus according to claim 30 or 31, wherein the processing module is specifically configured to:
determine a reference signal comprised in quasi-co-location information corresponding to a 1^{st} common TCI state in the at least two common TCI states as the first reference signal resource by default; or
determine the quasi-co-location information corresponding to the at least two common TCI states as the first reference signal resource.

33. The communication apparatus according to claim 32, wherein the processing module is further configured to:
when one or more of the at least two common TCI states are updated, reset a counter corresponding to an updated common TCI state.

34. The communication apparatus according to claim 33, wherein that the at least two common TCI states are updated comprises:
the at least two common TCI states indicated by the first indication information are inconsistent with an identifier of a common TCI state currently used by the terminal device for information transmission; or
the at least two common TCI states indicated by the first indication information are different from a reference signal comprised in quasi-co-location type-D information corresponding to a common TCI state currently used by the terminal device for information transmission.

35. The communication apparatus according to any one of claims 30 to 34, wherein the transceiver module is further configured to:
receive TRP mode switching indication information from the network device, wherein the TRP mode switching indication information indicates the terminal device to switch from information transmission based on a plurality of common beams to information transmission based on a single common beam; and
the processing module is further configured to re-determine the beam failure detection resource from a reference signal comprised in quasi-co-location information corresponding to the single common beam; or the processing module is further configured to re-determine the beam failure detection resource from an explicitly configured beam failure detection resource set indicated by the network device; or the processing module is further configured to still determine a first reference signal as the beam failure detection resource.

36. The communication apparatus according to any one of claims 30 to 34, wherein the transceiver module is further configured to:
receive TRP mode switching indication information from the network device, wherein the TRP mode switching indication information indicates to switch from information transmission based on a single common beam to information transmission based on a plurality of common beams, and the plurality of common beams comprise a newly added common beam and an original common beam; and
the processing module is further configured to: maintain a beam failure detection resource corresponding to the original common beam, and determine a beam failure detection resource of the newly added beam based on reference signals comprised in quasi-co-location information corresponding to at least two common TCI states corresponding to the newly added beam.

37. The communication apparatus according to claim 30, 31, 32, or 36, wherein the transceiver module is further configured to:
receive second indication information from the network device, wherein the second indication information indicates a first common TCI state in the at least two common TCI states; and
the processing module is further configured to determine a reference signal comprised in quasi-co-location information corresponding to the first common TCI state as the first reference signal resource; or
the processing module is further configured to use a reference signal comprised in quasi-co-location information corresponding to the first common TCI state to receive information from a physical downlink control channel, wherein the second indication information is carried in RRC signaling or DCI signaling.

38. A communication apparatus, used in a network device, wherein a terminal device communicates with the network device via multiple transmission and reception points TRPs of the network device, and the apparatus comprises:
a transceiver module, configured to send first indication information to the terminal device, wherein the first indication information indicates a common transmission configuration indicator TCI state, and different common TCI states correspond to different control resource set pool indexes.

39. The communication apparatus according to claim 38, wherein the first indication information comprises activation signaling, the activation signaling is used for determining the common TCI state, and the common TCI state corresponds to one TCI state or one group of TCI states; or
the first indication information comprises activation signaling and downlink control indication information, the activation information is used for determining the common TCI state, the common TCI state corresponds to a plurality of TCI states or a plurality of groups of TCI states, and the downlink control indication information indicates one common TCI state or one group of common TCI states in the plurality of common TCI states or the plurality of groups of common TCI states.

40. The communication apparatus according to claim 38 or 39, wherein the transceiver module is further configured to:
send TRP mode switching indication information to the terminal device, wherein the TRP mode switching indication information indicates the terminal device to switch from information transmission based on a plurality of common beams to information transmission based on a single common beam, or the TRP mode switching indication information indicates to switch from information transmission based on a single common beam to information transmission based on a plurality of common beams.

41. The communication apparatus according to claim 40, wherein the transceiver module is further configured to:
when the TRP mode switching indication information indicates to switch from the information transmission based on the single common beam to the information transmission based on the plurality of common beams, send resource indication information to the terminal device, wherein the resource indication information indicates a second resource used by the terminal device to determine a beam failure detection resource.

42. The communication apparatus according to claim 38, wherein the transceiver module is further configured to:
send second indication information to the terminal device, wherein the second indication information indicates a first common TCI state in the common TCI state, and the second indication information is carried in RRC signaling or DCI signaling.

43. A communication apparatus, wherein the communication apparatus comprises a processor and a transceiver, and the processor and the transceiver are configured to support the communication apparatus in performing the communication method according to any one of claims 1 to 21.

44. A computer-readable storage medium, wherein the computer-readable storage medium stores computer instructions, and when the computer instructions are run, the communication method according to any one of claims 1 to 21 is performed.

45. A communication system, wherein the communication system comprises a terminal device and a network device, the terminal device is configured to perform the communication method according to any one of claims 1 to 16, and the network device is configured to perform the communication method according to any one of claims 17 to 21.
